# EUROPÄISCHE PATENTSCHRIFT

(11) **EP 1 893 802 B1**
(45) Veröffentlichungstag und Bekanntmachung des Hinweises auf die Patenterteilung: **05.10.2011**
(21) Anmeldenummer: 06762107.8
(22) Anmeldetag: 21.06.2006
(51) Int. Cl.: D06M 15/643, C08G 77/388, C08L 83/08

(54) **SILOXAN-HALTIGE ZUBEREITUNG ZUR VERMINDERUNG DER FALTENBILDUNG**
SILOXANE-CONTAINING FORMULATION FOR REDUCING CREASE FORMATION
PREPARATION AU SILOXANE DESTINEE A REDUIRE LA FORMATION DE PLIS

(30) Priorität: 24.06.2005 DE 102005029778
(43) Veröffentlichungstag der Anmeldung: 05.03.2008
(73) Patentinhaber: Henkel AG & Co. KGaA, 40589 Düsseldorf (DE)
(72) Erfinder: SCHMIDT, Andreas, 40764 Langenfeld (DE); BENOMAR, Mustapha, 47137 Duisburg (DE); WILLEMSEN, Yvonne, 41352 Korschenbroich (DE); KOCH, Matthias, 70794 Filderstadt (DE); NICKEL, Friedhelm, 72072 Tübingen (DE); MAYER, Konstanze, 40589 Düsseldorf (DE)
(86) Internationale Anmeldenummer: PCT/EP2006/005933
(87) Internationale Veröffentlichungsnummer: WO 2006/136382

(56) Entgegenhaltungen:
- EP-A- 1 081 272
- WO-A-02/088456

## Beschreibung

Die vorliegende Erfindung betrifft eine Zusammensetzung zur Verminderung der Faltenbildung auf Textilien, die eine Mischung aus mindestens einem Aminoalkylsiloxan und mindestens einem mittels Hydroxycarbonsäuren und/oder Mono- und/oder Disacchariden mit jeweils mindestens zwei Hydroxylgruppen höher alkyl-modifizierten Amidoaminosiloxan gemäβ Anspruch 1 enthält, sowie die Verwendung dieser Zusammensetzung zur Behandlung von Textilien.

Falten und Knitter in Textilien werden verursacht durch das Knicken und Falten der Textilien infolge äußerer Krafteinwirkungen, insbesondere beim Tragen und beim Waschen der Textilien, wobei der nach außen gerichtete Teil der Textilie gespannt und gleichzeitig der nach innen gerichtete Teil der Textilie einem Druck ausgesetzt wird. Hierbei kann es auf molekularer Ebene insbesondere zur Ausbildung von Wasserstoffbrückenbindungen kommen, die den Deformationszustand nach dem Nachlassen der Krafteinwirkung zumindest teilweise arretieren. Dieses Problem tritt vor allem bei Baumwolle und den hier vorliegenden Wasserstoffbrückenbindungen zwischen Cellulose-Molekülen auf.

Im Stand der Technik ist bereits beschrieben, dass durch die Verwendung von Polysiloxanen die Faltenbildung in Textilien vermindert werden kann.

So werden in der US 4923623 Zusammensetzungen zur Verminderung der Faltenbildung bei Textilien beschrieben, die auf einer Stärke-haltigen Flüssigkeit beruhen und Aminosilicone enthalten.

Die Offenlegungen WO 96/15309 und WO 96/15310 beschreiben eine Zusammesetzung zur Verminderung der Faltenbildung bei Textilien, die wirksame Mengen an einem. Silicon und einem Film-bildenden Polymer sowie einen flüssigen Träger enthält, wobei die Zusammensetzung im Wesentlichen frei von Stärke und modifizierter Stärke ist.

EP 0 058493 beschreibt Zusammensetzungen zur Behandlung von Textilien, basierend auf Kombinationen spezieller Polyorganosiloxane, wobei unter anderem auch die Verminderung der Faltenbildung genannt wird.

Außerdem werden in den Offenlegungsschriften WO 02/088456, US 2002/0120057, EP 1033434 und EP 1081272 Siliconpolymere enthaltende Faserbehandlungsmittel beschrieben.

Überraschenderweise wurde nun gefunden, dass eine Zusammensetzung enthaltend mindestens ein Aminoalkylsiloxan und mindestens ein mittels Hydroxycarbonsäure und/oder Mono- oder Disacchariden mit jeweils mindestens zwei Hydroxylgruppen höher alkyl-modifiziertes Amidoaminosiloxan gemäβ Anspruch 1 hinsichtlich des Anti-Knitter-Verhaltens besonders vorteilhafte Eigenschaften aufweist.

Ein erster Gegenstand der vorliegenden Anmeldung ist daher eine Zusammensetzung enthaltend mindestens ein Aminoalkylsiloxan und mindestens ein mittels Hydroxycarbonsäure und/oder Mono-und/oder Disacchariden mit jeweils mindestens zwei Hydroxylgruppen höher alkyl-modifiziertes Amidoaminosiloxan, dadurch gekennzeichnet, dass sowohl das Aminoalkylsiloxan als auch das höher alkyl-modifizierte Amidoaminosiloxan ausgewählt sind aus Substanzen der allgemeinen Formel (I) 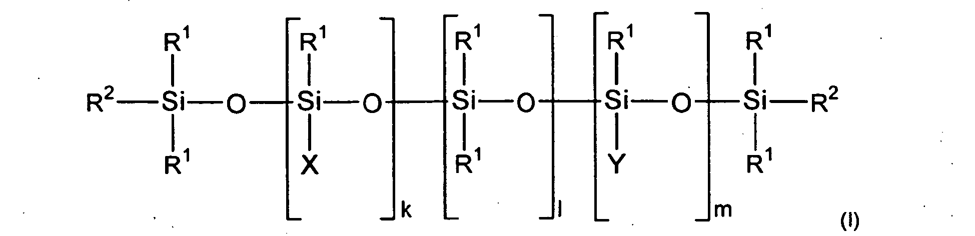 wobei für das höher alkyl-modifizierte Amidoaminosiloxan in Formel (I)
R¹ für gleiche oder verschiedene, einwertige, gegebenenfalls Fluor-, Chlor- oder Brom-substituierte
C₁- bis C₁₈-Kohlenwasserstoflreste, Wasserstoffatome, C₁- bis C₁₂-Alkoxy- oder Hydroxyreste oder
Alkylglykolreste steht,
R² für R¹ und/oder eine der Gruppen X und/oder Y steht,
X für eine Gruppe der allgemeinen Formeln (II) und/oder (III) steht, 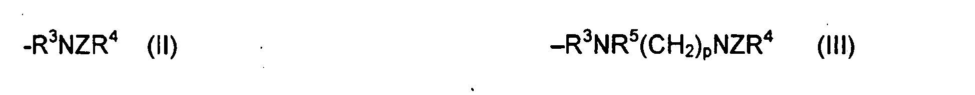 wobei R³ für einen zweiwertigen C₁-bis C₁₈-Kohtenwasserstoffrest,
R⁴ für ein Wasserstoffatom oder einen gegebenenfalls Fluor-, Chlor- oder Brom substituierten C₁- bis C₁₀-Alkylrest steht,
Z abgeleitet ist von Hydroxycarbonsäuren und oxidierten Mono- und Disacchariden, jeweils mit wenigstens 2 Hydroxylgruppen,
R⁵ für ein Wasserstoffatom und/oder Z steht,
Y für eine Gruppe der allgemeinen Formel (IV) und/oder (V) steht 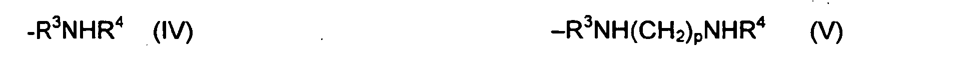 wobei R³ und R⁴ die oben genannten Bedeutungen haben,
k einen durchschnittlichen Wert von 0,5 bis 50,
I einen durchschnittlichen Wert von 10 bis 1500,
m einen durchschnittlichen Wert von 0 bis 50 hat und
p für die Werte 2, 3 oder 4 steht,
mit der Maßgabe, dass das Verhältnis von k zu m im Bereich von 10 : 1 bis 0,1 : 1 liegt,
und wobei für das Aminoalkylsiloxan in Formel (I)
R¹ für gleiche oder verschiedene, einwertige, gegebenenfalls Fluor-, Chlor- oder Brom-substituierte C₁- bis C₁₈-Kohlenwasserstoflreste, Wasserstoffatome, C₁- bis C₁₂-Alkoxy- oder Hydroxyreste oder Alkylglykolreste steht,
R² für R¹ und/oder für Y steht,
Y für eine Gruppe der allgemeinen Formel (IV) und/oder (V) steht 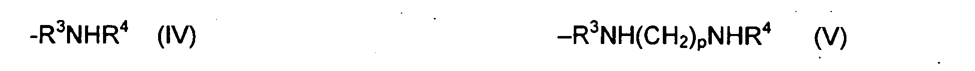 wobei R³ für einen zweiwertigen C₁-bis C₁₈-Kohlenwasserstoffrest,
R⁴ für ein Wasserstoffatom oder einen gegebenenfalls Fluor-, Chlor- oder Brom substituierten C₁- bis C₁₀-Alkylrest steht,
k den Wert 0 hat,
I einen durchschnittlichen Wert von 10 bis 1500,
m einen durchschnittlichen Wert von 1 bis 100, insbesondere 5 bis 50, hat und
p für die Werte 2, 3 oder 4 steht.

Die sequentielle Anordnung der substituierten Silizium-Atome im Molekül ist hierbei beliebig und ergibt sich aus dem Herstellungsverfahren.

Beispiele für C₁-C₁₈-Kohlenwasserstoffreste R¹ sind Methyl, Ethyl, n-Propyl, iso-Propyl, n-Butyl, iso-Butyl, tert.-Butyl, n-Pentyl, neo-Pentyl, tert.-Pentyl, n-Hexyl, n-Heptyl-, n-Octyl-, Trimethylpentyl, n-Nonyl-, n-Decyl-, n-Undecyl-, n-Dodecyl-, Cycloalkyl, insbesondere Cyclopentyl oder Cyclohexyl, Methylcyclohexyl, Aryl, insbesondere Phenyl oder Naphthyl, Alkaryl, insbesondere o-, m- oder p-Tolyl, Xylyl oder Ethylphenyl; Aralkylreste, insbesondere Benzyl, α- oder ß-Phenylethyl.

Die vorstehenden Kohlenwasserstoffreste enthalten gegebenenfalls eine aliphatische Doppelbindung. Beispiele sind-Alkenylreste wie Vinyl, Allyl, 5-Hexenyl, E-4-Hexenyl, Z-4-Hexen-1-yl, 2-(3-Cyclohexenyl)-ethyl- und Cyclododeca-4,8-dienyl. Bevorzugte Reste mit aliphatischer Doppelbindung sind Vinyl, Allyl, und 5-Hexenylrest. Vorzugsweise enthalten jedoch höchstens 1 % der Kohlenwasserstoffreste R¹ eine Doppelbindung.

Beispiele für mit Fluor-, Chlor- oder Bromatomen substituierte C₁- bis C₁₈-Kohlenwasserstoffreste sind der 3,3,3-Trifluor-n-propylrest, der 2,2,2,2',2',2'-Hexafluorisopropylrest, der Heptafluorisopropylrest und der o-, m- und p-Chlorphenylrest.

Beispiele für C₁- bis C₁₀-Alkylreste R⁴ sind die vorstehend bei R¹ aufgeführten Beispiele für lineare und cyclische Alkylreste und für mit Fluor-, Chlor- oder Bromatomen substituierten C₁- bis C₁₀-Alkylreste.

Beispiele für die zweiwertigen C₁- bis C₁₈-Kohlenwasserstoffreste R² sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenrest, wobei der n-Propylenrest und der 2-Methylpropylenrest besonders bevorzugt sind. Die Alkoxyreste sind über ein Sauerstoffatom gebundene vorstehend beschriebene Alkylreste. Die Beispiele für Alkylreste gelten im vollen Umfang auch für die Alkoxyreste.

Die Alkylglykolreste R¹ weisen vorzugsweise die allgemeine Formel (VI) 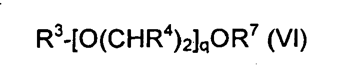 auf, in der R³, R⁴ die vorstehende Bedeutung haben, q den Wert 1 bis 100 hat und R⁷ für ein Wasserstoffatom, für einen Rest R⁴ oder für eine Gruppe der allgemeinen Formel -C(O)-R⁸
steht, wobei R⁸ für den Rest R⁴ oder O-R⁴ steht.

Die Gruppe Z steht für Reste, die sich mit wenigstens 2 Hydroxylgruppen von Hydroxycarbonsäuren und oxidierten Mono- und Disacchariden ableiten. Bevorzugt sind oxidierte Monosaccharide wie Uron-, Aldar- und Aldonsäuren der allgemeinen Formeln (VII), (VIII) und (IX)

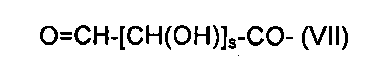

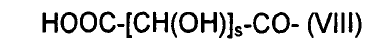

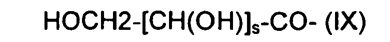

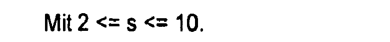

Beispiele für die Gruppe Z umfassen Reste der Mevalonsäure, Galacturonsäure, Glucuronsäure, L-Iduronsäure, Galactarsäure, Glucarsäure, Gluconsäure, Mannonsäure, 2-Keto-L-gulonsäure und Reste, die sich von den Formeln (X) und (XI) 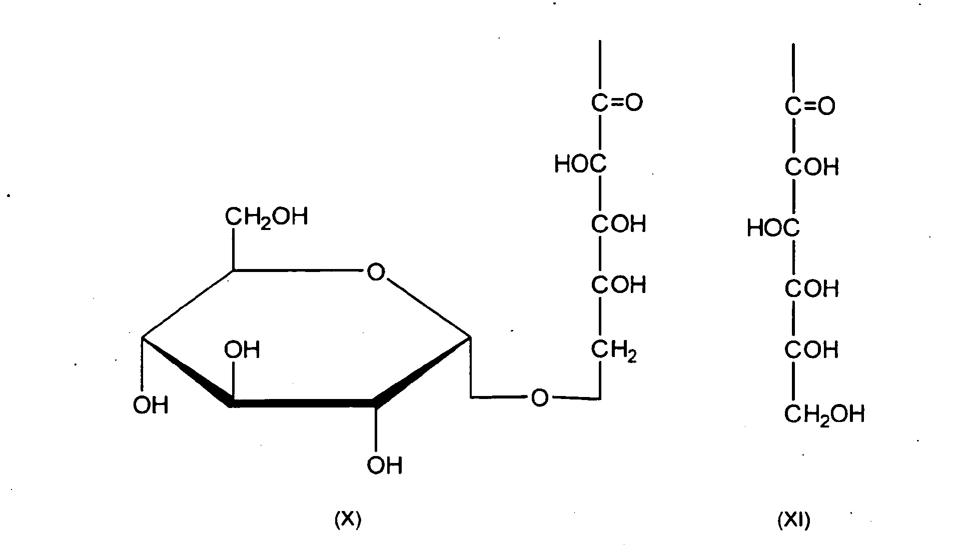 ableiten.

Besonders bevorzugt eingesetzt werden im Sinne der vorliegenden Erfindung bei Raumtemperatur feste Lactone.

In den vorstehenden allgemeinen Formeln (I) bis (VI) stehen vorzugsweise, unabhängig voneinander:
R¹ für einen Methyl-, Phenyl-, C₁- C₃-Alkoxy- oder Hydroxyrest oder einen Rest der allgemeinen Formel (VI),
R² für einen Rest R¹,
R³ für einen zweiwertigen C₂- bis C₆-Kohlenwasserstoffrest,
R⁴ für ein Wasserstoffatom oder einen C₂- bis C₆-Alkylrest.

Bei dem alkyl-modifizierten Amidoaminosiloxan stehen vorzugsweise
k für einen Wert von 0,5 bis 10,
I für einen Wert von 40 bis 600,
m für einen Wert von 0 bis 10 und
p für den Wert 2.

Dabei sind solche amidofunktionellen Aminopolydiorganosiloxane besonders bevorzugt, in denen das Verhältnis von k zu m im Bereich von 5 : 1 bis 1 : 1 liegt.

In einer besonders bevorzugten Ausführungsform des höher alkyl-modifizierten Amidoaminosiloxans stehen
R¹ für Methyl,
R² für C₁₋₄-Alkyl, insbesondere Methyl, OH, oder C₁₋₄-Alkoxy, insbesondere Methoxy,
X für ein Umsetzungsprodukt aus Aminoethylaminopropyl mit Glukonsäurelacton,
Y für Aminoethylaminopropyl.

In einer besonders bevorzugten Ausführungsform des Aminoalkylsiloxans stehen
R¹ für Methyl,
R² für C₁₋₄-Alkyl, insbesondere Methyl, OH, oder C₁₋₄-Alkoxy, insbesondere Methoxy,
Y für Aminoethylaminopropyl.

Das Aminoalkylsiloxan und das höher alkyl-modifizierte Amidoaminosiloxan sind in der erfindungsgemäßen Zusammensetzung unabhängig voneinander vorzugsweise in einer Menge von 0,001-20 Gew.-%, besonders bevorzugt in einer Menge von 0,01-10 Gew.-%, vor allem in einer Menge von 0,1-5,0 Gew.-%, enthalten.

Das Gew.-%-Verhältnis der Wirksubstanzen zueinander liegt hierbei vorzugsweise zwischen 1:20 und 20:1, insbesondere zwischen 1:10 und 10:1, bevorzugt von 2:3 bis 3:2.

In einer besonders bevorzugten Ausführungsform liegt das Gew.-%-Verhältnis von höher alkylmodifiziertem Amidoaminosiloxan zu Aminoalkylsiloxan zwischen 1:1 und 1:2, insbesondere zwischen 1:1,3 und 1:1,7, vorzugsweise zwischen 1:1,4 und 1:1,6, vor allem bei etwa 1:1,5, wobei die Gesamtmenge an Aktivsubstanz zwischen 0,1 und 3,0 Gew.-%, insbesondere zwischen 0,15 und 2,0 Gew.-%, vorzugsweise zwischen 0,2 und 1,0 Gew.-% liegt. In einer ganz besonders bevorzugten Ausführungsform ist auch eine Aktivsubstanzmenge zwischen 0,3 und 0,5 Gew.-% noch ausreichend, um gegenüber dem Stand der Technik noch eine signifikante Verbesserung zu erzielen.

Gegenstand der vorliegenden Erfindung ist des weiteren die Verwendung einer erfindungsgemäßen Zusammensetzung zur Entfernung und/oder Verminderung von Falten und/oder Faltenbildung und/oder zur Vorbeugung der Faltenbildung in Textilien.

Gegenstand der vorliegenden Erfindung ist des weiteren die Verwendung einer erfindungsgemäßen Zusammensetzung zur Behandlung von Textilien, insbesondere als Feinappretur, Bügelhilfe oder Weichspüler sowie die Verwendung einer erfindungsgemäßen Zusammensetzung in einem Textilbehandlungsmittel, insbesondere in einer Feinappretur, in einer Bügelhilfe oder in einem Weichspüler.

Weiterer Gegenstand der vorliegenden Erfindung ist ein Textilbehandlungsmittel, enthaltend eine erfindungsgemäße Zusammensetzung, wobei es sich bei dem Textilbehandlungsmittel insbesondere um eine Feinappretur, eine Bügelhilfe oder einen Weichspüler handelt.

Als Beispiele für erfindungsgemäß behandelbare Textilien seien Textilien aus Wolle, Baumwolle, Seide, Angora, Kunstseide, Polyester, Polyamid, Polyacryl sowie Mischgewebe aus diesen Materialien genannt. Vorzugsweise handelt es sich um Textilien aus Wolle oder Baumwolle sowie um Mischgewebe, die Wolle oder Baumwolle enthalten.

Die erfindungsgemäße Zusammensetzung bzw. des erfindungsgemäße Textilbehandlungsmittel kann auch weitere Komponenten enthalten, insbesondere solche die für die angegebenen Textilbehandlungsmittel bzw. Verwendungszwecke üblich sind.

In einer erfindungsgemäß bevorzugten Ausführungsform enthält die erfindungsgemäße Zusammensetzung mindestens eine Komponente ausgewählt aus nicht-wäßrigen Lösungsmitteln, Parfümstoffen und/oder Konservierungsmitteln.

Nichtwässrige Lösungsmittel, die eingesetzt werden können, stammen beispielsweise aus der Gruppe ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol; n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propyl-ether, Dipropylenglykolmonomethyl- oder -ethylether, Di-isopropylenglykolmonomethyl- oder -ethylether, Methoxy-, Ethoxy- oder Butoxytriglykol, 1-Butokyethoxy-2-propanol, 3-Methyl-3-methoxybutanol, Propylen-glykol-t-butylether sowie Mischungen dieser Lösungsmittel. Besonders bevorzugt ist Ethanol.

Nichtwässrige Lösungsmittel, insbesondere Ethanol oder iso-Propanol, sind in der in der erfindungsgemäßen Zusammensetzung vorzugsweise in einer Menge von 0,001-20 Gew.-%, besonders bevorzugt in einer Menge von 0,01-10 Gew.-%, vor allem in einer Menge von 0,1-5 Gew.-% enthalten.

Als Beispiele für Parfümstoffe seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Terpenalkoholen Menthol, Anethol, Citronellol, Eugenol, Isoeugenol, Geraniol, Linalool, Nerol, Phenylethylalkohol, Tetrahydromyrcenol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilllat, Irotyl und Floramat allein oder in Mischungen, eingesetzt.

Parfümstoffe sind vorzugsweise in einer Menge von 0,001-5 Gew.-%, besonders bevorzugt in einer Menge von 0,01-3 Gew.-%, vor allem in einer Menge von 0,1-2 Gew.-% in der erfindungsgemäßen Zusammensetzung enthalten.

Geeignete Konservierungsmittel sind insbesondere Isothiazolingemische, Natriumbenzoat und/oder Salicylsäure. Weitere Beispiele sind Stoffe mit spezifischer Wirkung gegen gram-positive Bakterien wie etwa 2,4,4'-Trichlor-2'-hydroxydiphenylether, Chlorhexidin (1,6-Di-(4-chlorphenyl-biguanido)-hexan) oder TCC (3,4,4'-Trichlorcarbanilid). Auch zahlreiche Riechstoffe und etherische Öle weisen antimikrobielle Eigenschaften auf. Typische Beispiele sind die Wirkstoffe Eugenol, Menthol und Thymol in Nelken-, Minz- und Thymianöl. Ein interessantes natürliches keimhemmendes Mittel ist der Terpenalkohol Farnesol (3,7,11-Trimethyl-2,6,10-dodecatrien-1-ol), der im Lindenblütenöl vorhanden ist und einen Maiglöckchengeruch hat. Auch Glycerinmonolaurat hat sich als Bakteriostatikum bewährt. Die Menge dieser keimhemmenden Mittel hängt stark von der Wirksamkeit der jeweiligen Verbindung ab und kann bis zu 5 Gew.-% betragen.

Als Konservierungsmittel geeignet sind weiterhin z.B. Benzoesäure bzw. Benzoat, Salicylsäure bzw. Salicylat, Sorbinsäure bzw. Sorbat, Ameisensäure bzw. Formiat, Propionsäure bzw. Propionat, Formaldehyd, Glutaraldehyd, o-Phenylphenol, pHB-Ester (z.B. Butyl-4-hydroxy-benzoate, Methyl-4-hydroxy-benzoate, Ethyl-4-hydroxy-benzoate, Propyl-4-hydroxy-benzoate),10-Undecylensäure, Hexetidin, Bronidox, Bronopol, Trichlorcarbanilid, p-Chlor-m-kresol, Triclosan, Imidazolidinylharnstoff, 2-Phenoxyethanol, Dimethyldimethylolhydantoin, Benzylalkohol, Dibromcyanobutan, Isothiazolinon-Gemische, 2-Chloracetamid, Chlorhexidingluconat, Diazolidinylharnstoff, Benzalkoniumchlorid, 1,2-Benzisothiozolon, Benzylalkoholmonochemiformal, 2-(2-Hydroxypropyl)aminomethanol, Methylenbisthiocyanat, (Thiocyanomethylthio)benzothiazol, Dithio-2,2'-bis(benzmethylamid), Silberchlorid auf TiO₂-Träger, Didecyldimethylenammoniumchlorid, N,N-bis-33-aminopropyl-C12-amin, Nahydroxymethylglycinat, Dehydracetsäure, Ethylenglycoldiformal, 2,4-Dichlorbenzylalkohol, 2-Phenoxypropanol, 3-(4-Chlorphenoxy)-1,2-propandiol, 4-Chlor-3,5-dimethylphenol, Hexadecylpyridiniumchlorid und/oder 3-Jodpropinyl-butyl-carbamat.

Konservierungsmittel sind vorzugsweise in einer Menge von 0,0001-5 Gew.-%, besonders bevorzugt in einer Menge von 0,001-1 Gew.-%, vor allem in einer Menge von 0,01-0,1 Gew.-% in der erfindungsgemäßen Zusammensetzung enthalten.

Gegenstand der vorliegenden Erfindung ist des weiteren ein Behältnis, das eine erfindungsgemäße Zusammensetzung oder ein erfindungsgemäßes Textilbehandlungsmittel enthält. Bei diesem Behältnis handelt es sich in einer bevorzugten Ausführungsform um ein Spray. Das Behältnis umfasst daher in einer bevorzugten Ausführungsform einen Sprühspender und die Applikation des Reinigungsmittels aus dem Behältnis erfolgt vorzugsweise unter Verwendung dieses Sprühspenders.

Bevorzugt ist der Sprühspender hierbei ein manuell aktivierter Sprühspender, insbesondere ausgewählt aus der Gruppe umfassend Aerosolsprühspender (Druckgasbehälter; auch u.a. als Spraydose bezeichnet), selbst Druck aufbauende Sprühspender, Pumpsprühspender und Triggersprühspender, insbesondere Pumpsprühspender und Triggersprühspender mit einem Behälter aus transparentem Polyethylen oder Polyethylenterephthalat. Sprühspender werden ausführlicher in der WO 96/04940 (Procter & Gamble) und den darin zu Sprühspendern zitierten US-Patenten, auf die in dieser Hinsicht sämtlich Bezug genommen und deren Inhalt hiermit in diese Anmeldung aufgenommen wird, beschrieben. Triggersprühspender und Pumpzerstäuber besitzen gegenüber Druckgasbehältern den Vorteil, daß kein Treibmittel eingesetzt werden muß.

Die erfindungsgemäße Zusammensetzung kann demgemäß insbesondere bei Verwendung von Druckgasbehältern auch ein oder mehrere Treibmittel (Propellants) enthalten. Diese sind üblicherweise in einer Menge von 1 bis 80 Gew.-%, vorzugsweise 1,5 bis 30 Gew.-%, insbesondere 2 bis 10 Gew.-%, besonders bevorzugt 2,5 bis 8 Gew.-%, vor allem 3 bis 6 Gew.-%, enthalten.

Treibmittel sind erfindungsgemäß üblicherweise Treibgase, insbesondere verflüssigte oder komprimiert Gase. Die Wahl richtet sich nach dem zu versprühenden Produkt und dem Einsatzgebiet. Bei der Verwendung von komprimierten Gasen wie Stickstoff, Kohlendioxid oder Distickstoffoxid, die im allgemeinen in dem flüssigen Reinigungsmittel unlöslich sind, sinkt der Betriebsdruck mit jeder Ventilbetätigung. Im Reinigungsmittel lösliche oder selbst als Lösungsmittel wirkende verflüssigte Gase (Flüssiggase) als Treibmittel bieten den Vorteil gleichbleibenden Betriebsdrucks und gleichmäßiger Verteilung, denn an der Luft verdampft das Treibmittel und nimmt dabei ein mehrhundertfaches Volumen ein.

Geeignet sind demgemäß folgende gemäß INCl bezeichnete Treibmittel: Butane, Carbon Dioxide, Dimethyl Carbonate, Dimethyl Ether, Ethane, Hydrochlorofluorocarbon 22, Hydrochlorofluorocarbon 142b, Hydrofluorocarbon 152a, Hydrofluorocarbon 134a, Hydrofluorocarbon 227ea, Isobutane, Isopentane, Nitrogen, Nitrous Oxide, Pentane, Propane. Auf Chlorfluorkohlenstoffe (Fluorchlorkohlenwasserstoffe, FCKW) als Treibmittel wird jedoch wegen ihrer schädlichen. Wirkung auf den - vor harter UV-Strahlung schützenden - Ozon-Schild der Atmosphäre, die sogenannte Ozon-Schicht, vorzugsweise weitgehend und insbesondere vollständig verzichtet.

Bevorzugte Treibmittel sind Flüssiggase. Flüssiggase sind Gase, die bei meist schon geringen Drücken und 20°C vom gasförmigen in den flüssigen Zustand übergeführt werden können. Insbesondere werden unter Flüssiggasen jedoch die - in Ölraffinerien als Nebenprodukte bei Destillation und Kracken von Erdöl sowie in der Erdgas-Aufbereitung bei der Benzinabscheidung anfallenden - Kohlenwasserstoffe Propan, Propen, Butan, Buten, Isobutan (2-Methylpropan), Isobuten (2-Methylpropen, Isobutylen) und deren Gemische verstanden. Besonders bevorzugt enthält die erfindungsgemäße Zusammensetzung ein oder mehrere Treibmittel ausgewählt aus Propan, Butan und/oder Isobutan, insbesondere Propan und Butan, vor allem eine Mischung aus Propan, Butan und Isobutan.

In einer weiteren erfindungsgemäß bevorzugten Ausführungsform handelt es sich bei der erfindungsgemäßen Zusammensetzung um einen Weichspüler. Sie wird dabei üblicherweise in den Nachspülgang einer automatischen Waschmaschine eingebracht.

Die erfindungsgemäße Zusammensetzung kann, insbesondere als Weichspüler, neben den zuvor genannten Komponenten eine oder mehrere der im folgenden aufgezählten Komponenten enthalten.

Zur Verbesserung des Weichgriffs und der avivierenden Eigenschaften enthalten die erfindungsgemäßen Zusammensetzungen in einer bevorzugten Ausführungsform zusätzlich Weichmacherkomponenten. Beispiele für solche Verbindungen sind quartäre Ammoniumverbindungen, kationische Polymere und Emulgatoren, wie sie in Haarpflegemitteln und auch in Mitteln zur Textilavivage eingesetzt werden.

Geeignete Beispiele sind quartäre Ammoniumverbindungen der Formeln (XII) und (XIII), 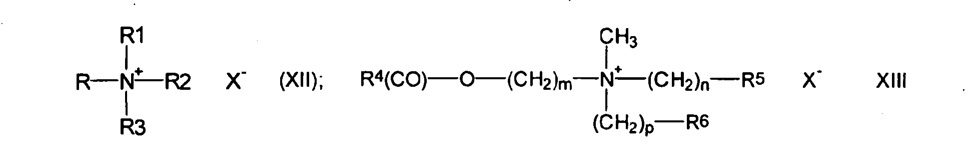 wobei in (XII) R und R¹ für einen acyclischen Alkylrest mit 12 bis 24 Kohlenstoffatomen, R² für einen gesättigten C₁-C₄ Alkyl- oder Hydroxyalkylrest steht, R³ entweder gleich R, R¹ oder R² ist oder für einen aromatischen Rest steht. X⁻ steht entweder für ein Halogenid-, Methosulfat-, Methophosphat- oder Phosphation sowie Mischungen aus diesen. Beispiele für kationische Verbindungen der Formel (XIII) sind Didecyldimethylammoniumchlorid, Ditalgdimethylammoniumchlorid oder Dihexadecylammoniumchlorid.

Besonders bevorzugt sind Zusammensetzungen, die zusätzlich gewebeweichmachende Komponenten auf Basis von Esterquats aufweisen.

Verbindungen der Formel (XIII) sind sogenannte Esterquats. Esterquats zeichnen sich durch eine hervorragende biologische Abbaubarkeit aus. In Formel (XIII) steht R⁴ für einen aliphatischen Alkylrest mit 12 bis 22 Kohlenstoffatomen mit 0, 1, 2 oder 3 Doppelbindungen; R⁵ steht für H, OH oder O(CO)R⁷, R⁶ steht unabhängig von R⁵ für H, OH oder O(CO)R⁸, wobei R⁷ und R⁸ unabhängig voneinander jeweils für einen aliphatischen Alk(en)ylrest mit 12 bis 22 Kohlenstoffatomen mit 0, 1, 2 oder 3 Doppelbindungen steht. m, n und p können jeweils unabhängig voneinander den Wert 1, 2 oder 3 haben. X⁻ kann entweder ein Halogenid-, Methosulfat-, Methophosphat- oder Phosphation sowie Mischungen aus diesen sein. Bevorzugt sind Verbindungen, die für R⁵ die Gruppe O(CO)R⁷ und für R⁴ und R⁷ Alkylreste mit 16 bis 18 Kohlenstoffatomen enthalten. Besonders bevorzugt sind Verbindungen, bei denen R⁶ zudem für OH steht. Beispiele für Verbindungen der Formel (IV) sind Methyl-N-(2-hydroxyethyl)-N,N-di(talgacyl-oxyethyl)ammonium-methosulfat, Bis-(palmitoyl)-ethyl-hydroxyethyl-methyl-ammonium-methosulfat oder Methyl-N,N-bis(acyloxyethyl)-N-(2-hydroxyethyl)ammonium-methosulfat. Werden quarternierte Verbindungen der Formel (IV) eingesetzt, die ungesättigte Alkylketten aufweisen, sind die Acylgruppen bevorzugt, deren korrespondierenden Fettsäuren eine Jodzahl zwischen 5 und 80, vorzugsweise zwischen 10 und 60 und insbesondere zwischen 15 und 45 aufweisen und die ein cis/trans-Isomerenverhältnis (in Gew.-%) von größer als 30: 70, vorzugsweise größer als 50: 50 und insbesondere größer als 70 : 30 haben. Handelsübliche Beispiele sind die von Stepan unter dem Warenzeichen Stepantex^{®} vertriebenen Methylhydroxyalkyldialkoyloxyalkylammoniummethosulfate oder die unter Dehyquart^{®} bekannten Produkte von Cognis bzw. die unter Rewoquat^{®} bekannten Produkte von Goldschmidt-Witco. Weitere bevorzugte Verbindungen sind die Diesterquats der Formel (XIV), die unter dem Namen Rewoquat® W 222 LM bzw. CR 3099 erhältlich sind und neben der Weichheit auch für Stabilität und Farbschutz sorgen. 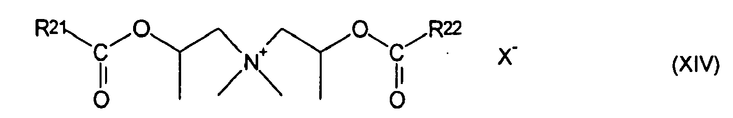 R²¹ und R²² stehen dabei unabhängig voneinander jeweils für einen aliphatischen Rest mit 12 bis 22 Kohlenstoffatomen mit 0, 1, 2 oder 3 Doppelbindungen.

Neben den oben beschriebenen quartären Verbindungen können auch andere bekannte Verbindungen eingesetzt werden, wie beispielsweise quartäre lmidazoliniumverbindungen der Formel (XV), 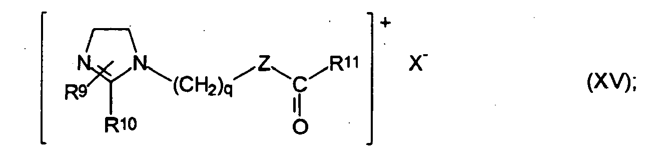 wobei R⁹ für H oder einen gesättigten Alkylrest mit 1 bis 4 Kohlenstoffatomen, R¹⁰ und R¹¹ unabhängig voneinander jeweils für einen aliphatischen, gesättigten oder ungesättigten Alkylrest mit 12 bis 18 Kohlenstoffatomen, R¹⁰ alternativ auch für O(CO)R²⁰ stehen kann, wobei R²⁰ einen aliphatischen, gesättigten oder ungesättigten Alkylrest mit 12 bis 18 Kohlenstoffatomen bedeutet, und Z eine NH-Gruppe oder Sauerstoff bedeutet und X⁻ ein Anion ist. q kann ganzzahlige Werte zwischen 1 und 4 annehmen.

Weitere besonders beovorzugte Esterquats sind durch Formel (XVI) beschrieben, 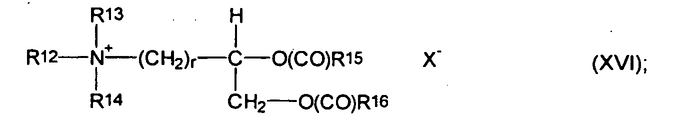 wobei R¹², R¹³ und R¹⁴ unabhängig voneinander für eine C₁₋₄-Alkyl-, Alkenyl- oder Hydroxyalkylgruppe steht, R¹⁵ und R¹⁶ jeweils unabhängig ausgewählt eine C₈₋₂₈-Alkylgruppe darstellt und r eine Zahl zwischen 0 und 5 ist.

Neben den Verbindungen der Formeln (XII) und (XIII) können auch kurzkettige, wasserlösliche, quartäre Ammoniumverbindungen eingesetzt werden, wie Trihydroxyethylmethylammoniummethosulfat oder die Alkyltrimethylammoniumchloride, Dialkyldimethylammoniumchloride und Trialkylmethylammoniumchloride, z.B. Cetyltrimethylammoniumchlorid, Stearyltrimethylammoniumchlorid, Distearyldimethylammoniumchlorid, Lauryldimethylammoniumchlorid, Lauryldimethylbenzylammoniumchlorid und Tricetylmethylammoniumchlorid.

Auch protonierte Alkylaminverbindungen, die weichmachende Wirkung aufweisen, sowie die nicht quaternierten, protonierten Vorstufen der kationischen Emulgatoren sind geeignet.

Weitere erfindungsgemäß verwendbare kationische Verbindungen stellen die quaternisierten Proteinhydrolysate dar.

Zu den geeigneten kationischen Polymeren zählen die Polyquaternium-Polymere, wie sie im CTFA Cosmetic Ingredient Dictionary (The Cosmetic, Toiletry und Fragrance, Inc., 1997), insbesondere die auch als Merquats bezeichneten Polyquaternium-6-, Polyquaternium-7-, Polyquaternium-10-Polymere (Ucare Polymer IR 400; Amerchol), Polyquaternium-4-Copolymere, wie Pfropfcopolymere mit einen Cellulosegerüst und quartären Ammoniumgruppen, die über Allyldimethylammoniumchlorid gebunden sind, kationische Cellulosederivate, wie kationisches Guar, wie Guar-hydroxypropyltriammoniumchlorid, und ähnliche quaternierte Guar-Derivate (z.B. Cosmedia Guar, Hersteller: Cognis GmbH), kationische quartäre Zuckerderivate (kationische Alkylpolyglucoside), z.B. das Handelsprodukt Glucquat^{®}100, gemäß CTFA-Nomenklatur ein "Lauryl Methyl Gluceth-10 Hydroxypropyl Dimonium Chloride", Copolymere von PVP und Dimethylaminomethacrylat, Copolymere von Vinylimidazol und Vinylpyrrolidon, Aminosiliconpolymere und Copolymere.

Ebenfalls einsetzbar sind polyquaternierte Polymere (z.B. Luviquat Care von BASF) und auch kationische Biopolymere auf Chitinbasis und deren Derivate, beispielsweise das unter der Handelsbezeichnung Chitosan^{®} (Hersteller: Cognis) erhältliche Polymer.

Ebenfalls einsetzbar sind Verbindungen der Formel (XVII), 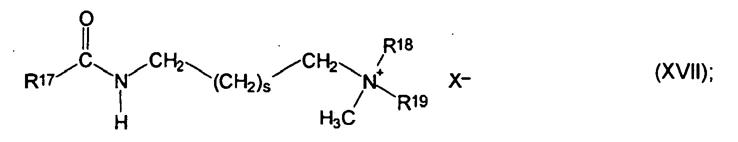 die Alkylamidoamine in ihrer nicht quaternierten oder, wie dargestellt, ihrer quaternierten Form, sein können. R¹⁷ kann ein aliphatischer Alk(en)ylrest mit 12 bis 22 Kohlenstoffatomen mit 0, 1, 2 oder 3 Doppelbindungen sein. s kann Werte zwischen 0 und 5 annehmen. R¹⁸ und R¹⁹ stehen unabhängig voneinander jeweils für H, C₁₋₄-Alkyl oder Hydroxyalkyl. Bevorzugte Verbindungen sind Fettsäureamidoamine wie das unter der Bezeichnung Tego Amid^{®}S 18 erhältliche Stearylamidopropyldimethylamin oder das unter der Bezeichnung Stepantex^{®} X 9124 erhältliche 3-Talgamidopropyl-trimethylammonium-methosulfat, die sich neben einer guten konditionierenden Wirkung auch durch farbübertragungsinhibierende Wirkung sowie speziell durch ihre gute biologische Abbaubarkeit auszeichnen.

Besonders bevorzugt sind alkylierte quaternäre Ammoniumverbindungen, von denen mindestens eine Alkylkette durch eine Estergruppe und/oder Amidogruppe unterbrochen ist, insbesondere N-Methyl-N(2-hydroxyethyl)-N,N-(ditalgacyloxyethyl)ammonium-methosulfat.

Als nichtionische Weichmacher kommen vor allem Polyoxyalkylenglycerolalkanoate, wie sie in der britischen Patentschrift GB 2,202,244, Polybutylene, wie sie in der britischen Patentschrift GB 2,199,855, langkettige Fettsäuren, wie sie in der EP 13 780, ethoxylierte Fettsäureethanolamide, wie sie in der EP 43 547, Alkylpolyglycoside, insbesondere Sorbitan- mono, -di- und triester, wie sie in der EP 698 140 und Fettsäureester von Polycarbonsäuren, wie sie in der deutschen Patentschrift DE 2,822,891 beschrieben werden.

In der erfindungsgemäßen Zusammensetzung können Weichmacher in Mengen von 1 bis 90 Gew.-%, vorzugsweise von 3 bis 35 Gew-%, jeweils bezogen auf das gesamte Mittel, enthalten sein.

Erfindungsgemäße Zusammensetzungen können des weiteren Fettalkohole und/oder Fettsäuren enthalten.

Als Fettsäuren für die Herstellung von Fettalkoholen werden - einzeln oder in Mischungen - Fettsäuren wie Capronsäure, Caprylsäure, Caprinsäure, 2-Ethylhexansäure, Laurinsäure, Myristinsäure, Palmitinsäure, Palmitoleinsäure, Isostearinsäure, Stearinsäure, Hydroxystearinsäure (Ricinolsäure), Dihydroxystearinsäure, Ölsäure, Linolsäure, Petrolesinsäure, Elaidinsäure, Arachinsäure, Behensäure und Erucasäure, Gadoleinsäure sowie die bei der Druckspaltung natürlicher Fette und Öle anfallenden technischen Mischungen wie Ölsäure, Linolsäure, Linolensäure, und insbesondere Rapsölfettsäure, Sojaölfettsäure, Sonnenblumenölfettsäure, Tallölfettsäure mitverwendet. Geeignet sind prinzipiell alle Fettsäuren mit ähnlicher Kettenverteilung.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Vorzugsweise werden teilgehärtete C_{8/18}-Kokos- bzw. Palmfettsäuren, Rapsölfettsäuren, Sonnenblumenölfettsäuren Sojaölfettsäuren und Tallölfett-säuren, mit Jodzahlen im Bereich von ca. 80 bis 150 und insbesondere technische C_{8/18}-Kokosfettsäuren eingesetzt, wobei gegebenenfalls eine Auswahl von cis/trans Isomeren wie elaidinsäurereiche C_{16/18}-Fettsäureschnitte von Vorteil sein kann. Sie sind handelsübliche Produkte und werden von verschiedenen Firmen unter deren jeweiligen Handelsnamen angeboten.

Um den pH-Wert der erfindungsgemäßen Zusammensetzungen in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 10 Gew.-% der Gesamtformulierung nicht.

Geeignete pH-Stellmittel sind beispielsweise anorganische Säuren, wie Salzsäure, Phosphorsäure, HBr und Schwefelsäure sowie organische Säuren, wie beispielsweise Ameisensäure, Essigsäure, Propionsäure, Buttersäure, Valeriansäure, Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Es können auch entsprechende C₂-C₁₂-Dicarbonsäuren eingesetzt werden, wie etwa Bernsteinsäure, Maleinsäure, Fumarsäure, Glutarsäure, Adipinsäure und Dodecandisäure. Besonders geeignet sind hydroxyfunktionalisierter mehrwertiger Carbonsäuren, wie z.B. Äpfelsäure, Weinsäure und insbesondere Citronensäure.

Die erfindungsgemäßen Zusammensetzungen sind vorzugsweise wäßrig und haben in einer bevorzugten Ausführungsform, insbesondere als Weichspüler, einen pH-Wert unterhalb von 9, besonders bevorzugt unterhalb von 7,5, insbesondere unterhalb von 6, äußerst bevorzugt unterhalb von 5, im speziellen von 2 bis 4,5.

Zur Stabilisierung der vorzugsweise in flüssiger Form vorliegenden Zusammensetzungen enthalten diese in einer bevorzugten Ausführungsform zusätzlich Elektrolyte, vorzugsweise Alkali- ünd/oder Erdalkalisalze, besonders bevorzugt Alkali- und/oder Erdalkalihalogenide, insbesondere die Erdalkalihalogenide von Magnesium und Calcium, im speziellen Magnesium- und/oder Calciumchlorid.

In einer bevorzugten Ausführungsform enthalten die erfindungsgemäßen Zusammensetzungen zusätzlich Geruchsabsorber. Geruchsabsorber im Sinne der Erfindung sind ein oder mehrere Metallsalze einer unverzweigten oder verzweigten, ungesättigten oder gesättigten, ein- oder mehrfach hydroxylierten Fettsäure mit mindestens 16 Kohlenstoffatomen und/oder einer Harzsäure mit Ausnahme der Alkalimetallsalze sowie beliebige Mischungen hiervon.

Eine besonders bevorzugte unverzweigte oder verzweigte, ungesättigte oder gesättigte, ein- oder mehrfach hydroxylierte Fettsäure mit mindestens 16 Kohlenstoffatomen ist die Ricinolsäure. Eine besonders bevorzugte Harzsäure ist die Abietinsäure.

Bevorzugte Metalle sind die Übergangsmetalle und die Lanthanoide, insbesondere die Übergangsmetalle der Gruppen VIIIa, Ib und IIb des Periodensystems sowie Lanthan, Cer und Neodym, besonders bevorzugt Cobalt, Nickel, Kupfer und Zink, äußerst bevorzugt Zink. Die Cobalt-, Nickel- sowie Kupfersalze und die Zinksalze sind zwar ähnlich wirksam, aus toxikologischen Gründen sind die Zinksalze jedoch zu bevorzugen.

Als vorteilhaft und daher besonders bevorzugt als desodorierende Substanzen einzusetzen sind ein oder mehrere Metallsalze der Ricinolsäure und/oder der Abietinsäure, vorzugsweise Zinkricinoleat und/oder Zinkabietat, insbesondere Zinkricinoleat.

Als weitere geeignete desodorierende Substanzen erweisen sich im Sinne der Erfindung ebenfalls Cyclodextrinen, sowie beliebige Mischungen der vorgenannten Metallsalze mit Cyclodextrien, bevorzugt in einem Gewichtsverhältnis von 1:10 bis 10:1, besonders bevorzugt von 1:5 bis 5:1 und insbesondere von 1:3 bis 3:1. Der Begriff "Cylcodextrin" beinhaltet dabei alle bekannten Cyclodextrine, d.h. sowohl unsubstituierte Cyclodextrine mit 6 bis 12 Glucoseeinheiten, insbesondere alpha-, beta- und gamma-Cyclodextrine und deren Mischungen und/oder deren Derivate und/oder deren Mischungen.

Zur besseren Dispergierung, Suspendierung oder Emulgierung der vorteilhafterweise einzusetzenden gewebeweichmachenden Substanzen enthält die Zusammensetzung vorteilhafterweise zusätzlich Tenside. Die Tenside sind dabei ausgewählt aus der Gruppe der anionischen, nichtionischen, kationischen, zwitterinonischen und amphoteren Tenside.

Die erfindungsgemäßen Zusammensetzungen können in einer bevorzugten Ausführungsform zusätzlich Tenside enthalten. Der zusätzliche Einsatz von Tensiden bewirkt eine Verstärkung der konditionierenden Eigenschaften und trägt zudem zu einer verbesserten Lagerstabilität und Dispergierbarkeit beziehungsweise Emulgierbarkeit der einzelnen Konditionierungsmittelkomponenten bei.

Als nichtionische Tenside werden vorzugsweise alkoxylierte, vorteilhafterweise ethoxylierte und/oder propoxylierte, insbesondere primäre Alkohole mit vorzugsweise 8 bis 18 C-Atomen und durchschnittlich 1 bis 12 Mol Ethylenoxid (EO) und/oder 1 bis 10 Mol Propylenoxid (PO) pro Mol Alkohol, eingesetzt. Besonders bevorzugt sind C₈-C₁₆-Alkoholalkoxylate, vorteilhafterweise ethoxylierte und/oder propoxylierte C₁₀-C₁₅-Alkoholalkoxylate, insbesondere C₁₂-C₁₄-Alkoholalkoxylate, mit einem Ethoxylierungsgrad zwischen 2 und 10, vorzugsweise zwischen 3 und 8, und/oder einem Propoxylierungsgrad zwischen 1 und 6, vorzugsweise zwischen 1,5 und 5. Der Alkoholrest kann vorzugsweise linear oder besonders bevorzugt in 2-Stellung methylverzweigt sein bzw. lineare und methylverzweigte Reste im Gemisch enthalten, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungs- und Propoxylierungsgrade stellen statistische Mittelwerte dar, die für ein spezielles Produkt eine ganze oder eine gebrochene Zahl sein können. Bevorzugte Alkoholethoxylate und -propoxylate weisen eine eingeengte Homologenverteilung auf (narrow range ethoxylates/propoxylates, NRE/NRP). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Weiterhin geeignet sind alkoxylierte Amine, vorteilhafterweise ethoxylierte und/oder propoxylierte, insbesondere primäre und sekundäre Amine mit vorzugsweise 1 bis 18 C-Atomen pro Alkylkette und durchschnittlich 1 bis 12 Mol Ethylenoxid (EO) und/oder 1 bis 10 Mol Propylenoxid (PO) pro Mol Amin.

Außerdem können als weitere nichtionische Tenside auch Alkylglykoside der allgemeinen Formel RO(G)ₓ, z. B. als Compounds, besonders mit anionischen Tensiden, eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-di-methylaminoxid und N-Talgalkyl-N,N-dihydroxyethylaminoxid, und der Fettsäurealkanolamide können geeignet sein.

Als weitere Tenside kommen sogenannte Gemini-Tenside in Betracht. Hierunter werden im allgemeinen solche Verbindungen verstanden, die zwei hydrophile Gruppen und zwei hydrophobe Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, daß die hydrophilen Gruppen einen ausreichenden Abstand haben, damit sie unabhängig voneinander agieren können. Derartige Tenside zeichnen sich im allgemeinen durch eine ungewöhnlich geringe kritische Micellkonzentration und die Fähigkeit, die Oberflächenspannung des Wassers stark zu reduzieren, aus. In Ausnahmefällen werden jedoch unter dem Ausdruck Gemini-Tenside nicht nur dimere, sondern auch trimere Tenside verstanden.

Geeignete Gemini-Tenside sind beispielsweise sulfatierte Hydroxymischether gemäß der deutschen Patentanmeldung DE-A-43 21 022 oder Dimeralkohol-bis- und Trimeralkohol-tris-sulfate und -ethersulfate gemäß der internationalen Patentanmeldung WO-A-96/23768. Endgruppenverschlossene dimere und trimere Mischether gemäß der deutschen Patentanmeldung DE-A-195 13 391 zeichnen sich insbesondere durch ihre Bi- und Multifunktionalität aus. So besitzen die genannten endgruppenverschlossenen Tenside gute Netzeigenschaften und sind dabei schaumarm, so daß sie sich insbesondere für den Einsatz in maschinellen Wasch- oder Reinigungsverfahren eignen.

Eingesetzt werden können aber auch Gemini-Polyhydroxyfettsäureamide oder Poly-Polyhydroxyfettsäureamide, wie sie in den internationalen Patentanmeldungen WO-A-95/19953, WO-A-95/19954 und WO-A-95/19955 beschrieben werden.

Weitere geeignete Tenside sind Polyhydroxyfettsäureamide der folgenden Formel, 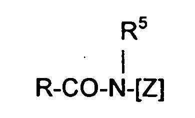 in der RCO für einen aliphatischen Acylrest mit 6 bis 22 Kohlenstoffatomen, R⁵ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der folgenden Formel, 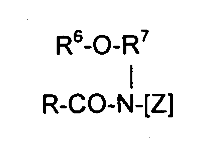 in der R für einen linearen oder verzweigten Alkyl- oder Alkenylrest mit 7 bis 12 Kohlenstoffatomen, R⁶ für einen linearen, verzweigten oder cyclischen Alkylrest oder einen Arylrest mit 2 bis 8 Kohlenstoffatomen und R⁷ für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielsweise nach der Lehre der internationalen Anmeldung WO-A-95/07331 durch Umsetzung mit Fettsäuremethylestern in Gegenwart eines Alkoxids als Katalysator in die gewünschten Polyhydroxyfettsäureamide überführt werden.

Bevorzugte nichtionische Tenside sind ein oder mehrere mit Ethylen- (EO) und/oder Propylenoxid (PO) alkoxylierte, unverzweigte oder verzweigte, gesättigte oder ungesättigte C₁₀₋₂₂-Alkohole mit einem Alkoxylierungsgrad bis zu 30, vorzugsweise ethoxylierte C₁₀₋₁₈-Fettalkohole mit einem Ethoxylierungsgrad von weniger als 30, bevorzugt 1 bis 20, insbesondere 1 bis 12, besonders bevorzugt 1 bis 8, äußerst bevorzugt 2 bis 5, beispielsweise C₁₂₋₁₄-Pettalkoholethoxylate mit 2, 3 oder 4 EO oder eine Mischung von der C₁₂₋₁₄-Fettalkoholethoxylate mit 3 und 4 EO im Gewichtsverhältnis von 1 zu 1 oder Isotridecylalkoholethoxylat mit 5, 8 oder 12 EO, wie sie beispielsweise in der DE 40 14 055 C2 (*Grillo-Werke*), auf die in dieser Hinsicht Bezug genommen und deren Inhalt hiermit in diese Anmeldung aufgenommen wird, beschrieben werden.

Die nichtionischen Tenside können üblicherweise in Mengen bis zu 50 Gew.-%, vorzugsweise von 0,1 bis 40 Gew.-%, besonders bevorzugt von 0,5 bis 30 und insbesondere von 2 bis 25 Gew.-%, jeweils bezogen auf das gesamte Mittel, vorliegen.

Zusätzlich können die erfindungsgemäßen Zusammensetzungen gegebenenfalls amphoterische Tenside enthalten. Neben zahlreichen ein- bis dreifach alkylierten Aminoxiden stellen die Betaine eine bedeutende Klasse dar.

Betaine stellen bekannte Tenside dar, die überwiegend durch Carboxyalkylierung, vorzugsweise Carboxymethylierung von aminischen Verbindungen hergestellt werden. Vorzugsweise werden die Ausgangsstoffe mit Halogencarbonsäuren oder deren Salzen, insbesondere mit Natriumchloracetat kondensiert, wobei pro Mol Betain ein Mol Salz gebildet wird. Ferner ist auch die Anlagerung von ungesättigten Carbonsäuren, wie beispielsweise Acrylsäure möglich. Zur Nomenklatur und insbesondere zur Unterscheidung zwischen Betainen und "echten" Amphotensiden sei auf den Beitrag von U.Ploog in Seifen-Öle-Fette-Wachse, 108, 373 (1982) verwiesen. Weitere Übersichten zu diesem Thema finden sich beispielsweise von A.O'Lennick et al. in HAPPI, Nov. 70 (1986), S.Holzman et al. in Tens. Surf.Det. 23, 309 (1986), R.Bibo et al. in Soap Cosm.Chem.Spec., Apr. 46 (1990) und P.Ellis et al. in Euro Cosm. 1, 14 (1994). Beispiele für geeignete Betaine stellen die Carboxyalkylierungsprodukte von sekundären und insbesondere tertiären Aminen dar, die der Formel (XVIII) folgen, 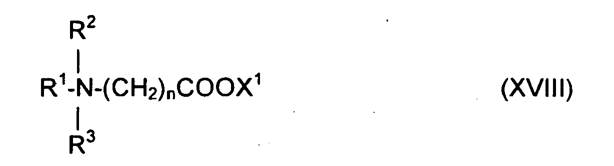 in der R¹ für Alkyl- und/oder Alkenylreste mit 6 bis 22 Kohlenstoffatomen, R² für Wasserstoff oder Alkylreste mit 1 bis 4 Kohlenstoffatomen, R³ für Alkylreste mit 1 bis 4 Kohlenstoffatomen, n für Zahlen von 1 bis 6 und X¹ für ein Alkali- und/oder Erdalkalimetall oder Ammonium steht. Typische Beispiele sind die Carboxymethylierungsprodukte von Hexylmethylamin, Hexyldimethylamin, Octyldimethylamin, Decyldimethylamin, Dodecylmethylamin, Dodecyldimethylamin, Dodecylethylmethylamin, C_{12/14}-Kokosalkyldimethylamin, Myristyldimethylamin, Cetyldimethylamin, Stearyldimethylamin, Stearylethylmethylamin, Oleyldimethylamin, C_{16/18}-Talgalkyldimethylamin sowie deren technische Gemische.

Weiterhin kommen auch Carboxyalkylierungsprodukte von Amidoaminen in Betracht, die der Formel (XIX) folgen, 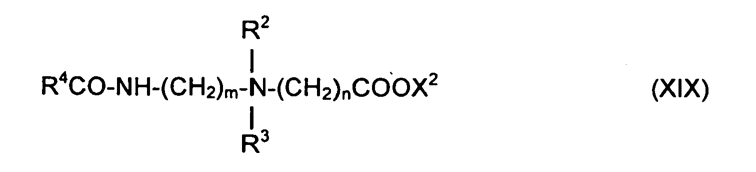 in der R⁴CO für einen aliphatischen Acylrest mit 6 bis 22 Kohlenstoffatomen und 0 oder 1 bis 3 Doppelbindungen, m für Zahlen von 1 bis 3 steht und R², R³, n und X² die oben angegebenen Bedeutungen haben. Typische Beispiele sind Umsetzungsprodukte von Fettsäuren mit 6 bis 22 Kohlenstoffatomen, namentlich Capronsäure, Caprylsäure, Caprinsäure, Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Gemische, mit N,N-Dimethylaminoethylamin, N,N-Dimethylaminopropylamin, N,N-Diethylaminoethylamin und N,N-Diethylaminopropylamin, die mit Natriumchloracetat kondensiert werden. Bevorzugt ist der Einsatz eines Kondensationsproduktes von C_{8/18}-Kokosfettsaure-N,N-dimethylaminopropylamid mit Natriumchloracetat.

Weiterhin kommen als geeignete Ausgangsstoffe für die im Sinne der Erfindung einzusetzenden Betaine auch Imidazoline in Betracht, die der Formel (XX) folgen, 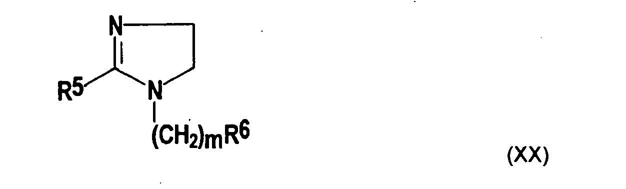 in der R⁵ für einen Alkylrest mit 5 bis 21 Kohlenstoffatomen, R⁶ für eine Hydroxylgruppe, einen OCOR⁵- oder NHCOR⁵-Rest und m für 2 oder 3 steht. Auch bei diesen Substanzen handelt es sich um bekannte Stoffe, die beispielsweise durch cyclisierende Kondensation von 1 oder 2 Mol Fettsäure mit mehrwertigen Aminen, wie beispielsweise Aminoethylethanolamin (AEEA) oder Diethylentriamin erhalten werden können. Die entsprechenden Carboxyalkylierungsprodukte stellen Gemische unterschiedlicher offenkettiger Betaine dar. Typische Beispiele sind Kondensationsprodukte der oben genannten Fettsäuren mit AEEA, vorzugsweise Imidazoline auf Basis von Laurinsäure oder wiederum C_{12/14}-Kokosfettsäure, die anschließend mit Natriumchloracetat betainisiert werden.

In einer bevorzugten Ausführungsform liegen die erfindungsgemäßen Zusammensetzungen in flüssiger Form vor. Zum Erreichen einer flüssigen Konsistenz kann der Einsatz sowohl flüssiger organischer Lösungsmittel, wie auch der von Wasser angezeigt sein. Die erfindungsgemäßen Wäschekonditionierungsmittel enthalten daher gegebenenfalls Lösungsmittel.

Lösungsmittel, die insbesondere in Weichspülern eingesetzt werden können, stammen beispielsweise aus der Gruppe ein- oder mehrwertigen Alkohole, Alkanolamine oder Glycolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propanoder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propyl-ether, Butoxy-propoxy-propanol (BPP), Dipropylenglykolmonomethyl-, oder - ethylether, Di-isopropylenglykolmonomethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel.

Einige Glykolether sind unter den Handelsnamen Arcosolv^{®} (Arco Chemical Co.) oder Cellosolve^{®}, Carbitol^{®} oder Propasol^{®} (Union Carbide Corp.) erhältlich; dazu gehören auch z.B. ButylCarbitol^{®}, HexyICarbitol^{®}, MethylCarbitol^{®}, und Carbitol^{®} selbst, (2-(2-Ethoxy)ethoxy)ethanol. Die Wahl des Glykolethers kann vom Fachmann leicht auf der Basis seiner Flüchtigkeit, Wasserlöslichkeit, seines Gewichtsprozentanteils an der gesamten Dispersion und dergleichen getroffen werden. Pyrrolidon-Lösungsmittel, wie N-Alkylpyrrolidone, beispielsweise N-Methyl-2-pyrrolidon oder N-C₈-C₁₂-Alkylpyrrolidon, oder 2-Pyrrolidon, können ebenfalls eingesetzt werden. Weiterhin bevorzugt als alleinige Lösungsmittel oder als Bestandteil eines Lösungsmittelgemisches sind Glycerinderivate, insbesondere Glycerincarbonat.

Zu den Alkoholen, die in der vorliegenden Erfindung als Cosolvention eingesetzt werden können, gehören flüssige Polyethylenglykole, mit niederem Molekulargewicht, beispielsweise Polyethylenglykole mit einem Molekulargewicht von 200, 300, 400 oder 600. Weitere geeignete Cosolventien sind andere Alkohole, zum Beispiel (a) niedere Alkohole wie Ethanol, Propanol, Isopropanol und n-Butanol, (b) Ketone wie Aceton und Methylethylketon, (c) C₂-C₄-Polyole wie ein Diol oder ein Triol, beispielsweise Ethylenglykol, Propylenglykol, Glycerin oder Gemische davon. Insbesondere bevorzugt ist aus der Klasse der Diole 1,2-Octandiol.

In einer bevorzugten Ausführungsform enthält die erfindungsgemäße Zusammensetzung ein oder mehrere Lösungsmittel aus der Gruppe umfassend C₁- bis C₄-Monoalkohole, C₂- bis C₆-Glykole, C₃- bis C₁₂-Glykolether und Glycerin, insbesondere Ethanol. Die erfindungsgemäßen C₃- bis C₁₂-Glykolether enthalten Alkyl- bzw. Alkenylgruppen mit weniger als 10 Kohlenstoffatomen, vorzugsweise bis zu 8, insbesondere bis zu 6, besonders bevorzugt 1 bis 4 und äußerst bevorzugt 2 bis 3 Kohlenstoffatomen.

Bevorzugte C₁- bis C₄-Monoalkohole sind Ethanol, n-Propanol, iso-Propanol und tert-Butanol. Bevorzugte C₂- bis C₈-Glykole sind Ethylenglykol, 1,2-Propylenglykol, 1,3-Propylenglykol, 1,5-Pentandiol, Neopentylglykol und 1,6-Hexandiol, insbesondere Ethylenglykol und 1,2-Propylenglykol. Bevorzugte C₃- bis C₁₂-Glykolether sind Di-, Tri-, Tetra- und Pentaethylenglykol, Di-, Tri-und Tetrapropylenglykol, Propylenglykolmonotertiärbutylether und Propylenglykolmonoethylether sowie die gemäß INCl bezeichneten Lösungsmittel Butoxydiglycol, Butoxyethanol, Butoxyisopropanol, Butoxypropanol, Butyloctanol, Ethoxydiglycol, Ethoxyethanol, Ethyl Hexanediol, Isobutoxypropanol, Isopentyldiol, 3-Methoxybutanol, Methoxyethanol, Methoxyisopropanol und Methoxymethylbutanol.

Die erfindungsgemäße Zusammensetzung kann insbesondere als Weichspüler ein oder mehrere Lösungsmittel in einer Menge von üblicherweise bis zu 40 Gew.-%, vorzugsweise 0,1 bis 30 Gew.-%, insbesondere 2 bis 20 Gew.-%, besonders bevorzugt 3 bis 15 Gew.-%, äußerst bevorzugt 5 bis 12 Gew.-%, beispielsweise 5,3 oder 10,6 Gew.-%, jeweils bezogen auf das gesamte Mittel, enthalten.

In einer bevorzugten Ausführungsform enthält die erfindungsgemäße Zusammensetzung gegebenenfalls Wasser in einer Menge von mehr als 50 Gew.-%, insbesondere 60 bis 95 Gew.-%, besonders bevorzugt 70 bis 93 Gew.-% und äußerst bevorzugt 80 bis 90 Gew.-%.

Weiterhin kann die erfindungsgemäße Zusammensetzung ein oder mehrere übliche Hilfs- und Zusatzstoffe, insbesondere aus der Gruppe der Gerüststoffe, Enzyme, Bleichmittel, Bleichaktivatoren, Elektrolyte, pH-Stellmittel, Komplexbildner, Duftstoffe, Parfümträger, Fluoreszenzmittel, Farbstoffe, Schauminhibitoren, Vergrauungsinhibitoren, Knitterschutzmittel, antimikrobielle Wirkstoffe, Germizide, Fungizide, Antioxidantien, Antistatika, Bügelhilfsmittel, UV-Absorber, optischen Aufheller, Antiredepositionsmittel, Viskositätsregulatoren, Perlglanzgeber, Farbübertragungsinhibitoren, Einlaufverhinderer, Korrosionsinhibitoren, Konservierungsmittel, Phobier- und Imprägniermittel, Hydrotrope, Silikonöle sowie Quell- und Schiebefestmittel enthalten.

In einer bevorzugten Ausführungsform kann die erfindungsgemäße Zusammensetzung gegebenenfalls zusätzlich ein oder mehrere Komplexbildner enthalten.

Komplexbildner (INCl Chelating Agents), auch Sequestriermittel genannt, sind Inhaltsstoffe, die Metallionen zu komplexieren und inaktivieren vermögen, um ihre nachteiligen Wirkungen auf die Stabilität oder das Aussehen der Mittel, beispielsweise Trübungen, zu verhindern. Einerseits ist es dabei wichtig, die mit zahlreichen Inhaltsstoffen inkompatiblen Calcium- und Magnesiumionen der Wasserhärte zu komplexieren. Die Komplexierung der Ionen von Schwermetallen wie Eisen oder Kupfer verzögert die oxidative Zersetzung der fertigen Mittel.

Geeignet sind beispielsweise die folgenden gemäß INCI bezeichneten Komplexbildner, die im *International Cosmetic Ingredient Dictionary and Handbook* näher beschrieben sind: Aminotrimethylene Phosphonic Acid, Beta-Alanine Diacetic Acid, Calcium Disodium EDTA, Citric Acid, Cyclodextrin, Cyclohexanediamine Tetraacetic Acid, Diammonium Citrate, Diammonium EDTA, Diethylenetriamine Pentamethylene Phosphonic Acid, Dipotassium EDTA, Disodium Azacycloheptane Diphosphonate, Disodium EDTA, Disodium Pyrophosphate, EDTA, Etidronic Acid, Galactaric Acid, Gluconic Acid, Glucuronic Acid, HEDTA, Hydroxypropyl Cyclodextrin, Methyl Cyclodextrin, Pentapotassium Triphosphate, Pentasodium Aminotrimethylene Phosphonate, Pentasodium Ethylenediamine Tetramethylene Phosphonate, Pentasodium Pentetate, Pentasodium Triphosphate, Pentetic Acid, Phytic Acid, Potassium Citrate, Potassium EDTMP, Potassium Gluconate, Potassium Polyphosphate, Potassium Trisphosphonomethylamine Oxide, Ribonic Acid, Sodium Chitosan Methylene Phosphonate, Sodium Citrate, Sodium Diethylenetriamine Pentamethylene Phosphonate, Sodium Dihydroxyethylglycinate, Sodium EDTMP, Sodium Gluceptate, Sodium Gluconate, Sodium Glycereth-1 Polyphosphate, Sodium Hexametaphosphate, Sodium Metaphosphate, Sodium Metasilicate, Sodium Phytate, Sodium Polydimethylglycinophenolsulfonate, Sodium Trimetaphosphate, TEA-EDTA, TEA-Polyphosphate, Tetrahydroxyethyl Ethylenediamine, Tetrahydroxypropyl Ethylenediamine, Tetrapotassium Etidronate, Tetrapotassium Pyrophosphate, Tetrasodium EDTA, Tetrasodium Etidronate, Tetrasodium Pyrophosphate, Tripotassium EDTA, Trisodium Dicarboxymethyl Alaninate, Trisodium EDTA, Trisodium HEDTA, Trisodium NTA und Trisodium Phosphate.

Bevorzugte Komplexbildner sind tertiäre Amine, insbesondere tertiäre Alkanolamine (Aminoalkohole). Die Alkanolamine besitzen sowohl Amino- als auch Hydroxy- und/oder Ethergruppen als funktionelle Gruppen. Besonders bevorzugte tertiäre Alkanolamine sind Triethanolamin und Tetra-2-hydroxypropylethylendiamin (N,N,N',N'-Tetrakis-(2-hydroxypropyl)ethylendiamin). Besonders bevorzugte Kombinationen tertiärer Amine mit Zinkricinoleat und einem oder mehreren ethoxylierten Fettalkoholen als nichtionische Lösungsvermittler sowie ggf. Lösungsmittel sind in der DE 40 14 055 C2 (*Grillo-Werke*) beschrieben, auf die in dieser Hinsicht Bezug genommen und deren Inhalt hiermit in diese Anmeldung aufgenommen wird.

Ein besonders bevorzugter Komplexbildner ist die Etidronsäure (1-Hydroxyethyliden-1,1-diphosphonsäure, 1-Hydroxyethyan-1,1-diphosphonsäure, HEDP, Acetophosphonsäure, INCI Etidronic Acid) einschließlich ihrer Salze. In einer bevorzugten Ausführungsform enthält das erfindungsgemäße Mittel demgemäß als Komplexbildner Etidronsäure und/oder eines oder mehrere ihrer Salze.

In einer besonderen Ausführungsform enthält die erfindungsgemäße Zusammensetzung eine Komplexbildnerkombination aus einem oder mehreren tertiären Aminen und einer oder mehreren weiteren Komblexbildnern, vorzugsweise einer oder mehreren Komplexbildnersäuren oder deren Salzen, insbesondere aus Triethanolamin und/oder Tetra-2-hydroxypropylethylendiamin und Etidronsäure und/oder einem oder mehrerer ihrer Salze.

Die erfindungsgemäße Zusammensetzung enthält Komplexbildner in einer Menge von üblicherweise 0 bis 20 Gew.-%, vorzugsweise 0,1 bis 15 Gew.-%, insbesondere 0,5 bis 10 Gew.-%, besonders bevorzugt 1 bis 8 Gew.-%, äußerst bevorzugt 1,5 bis 6 Gew.-%, beispielsweise 1,5, 2,1, 3 oder 4,2 Gew.-%.

In einer weiteren Ausführungsform enthält die erfindungsgemäße Zusammensetzung gegebenenfalls ein oder mehrere Viskositätsregulatoren, die vorzugsweise als Verdicker fungieren. Die Viskosität der Mittel kann mit üblichen Standardmethoden (beispielsweise Brookfield-Viskosimeter RVD-VII bei 20 U/min und 20°C, Spindel 3) gemessen werden und liegt vorzugsweise im Bereich von 10 bis 5000 mPas. Bevorzugte flüssige bis gelförmige Mittel haben Viskositäten von 20 bis 4000 mPas, wobei Werte zwischen 40 und 2000 mPas besonders bevorzugt sind.

Geeignete Verdicker sind anorganische oder polymere organische Verbindungen. Es können auch Gemische aus mehreren Verdickern eingesetzt werden.

Zu den anorganischen Verdickern zählen beispielsweise Polykieselsäuren, Tonmineralien wie Montmorillonite, Zeolithe, Kieselsäuern, Aluminiumsilikate, Schichtsilikate und Bentonite.

Die organischen Verdicker stammen aus den Gruppen der natürlichen Polymere, der abgewandelten natürlichen Polymere und der vollsynthetischen Polymere.

Aus der Natur stammende Polymere, die als Verdicker Verwendung finden, sind beispielsweise Xanthan, Agar-Agar, Carrageen, Tragant, Gummi arabicum, Alginate, Pektine, Polyosen, GuarMehl, Gellan-Gum, Johannisbrotbaumkernmehl, Stärke, Dextrine, Gelatine und Casein.

Abgewandelte Naturstoffe stammen vor allem aus der Gruppe der modifizierten Stärken und Cellulosen, beispielhaft seien hier Carboxymethylcellulose und andere Celluloseether, Hydroxyethyl- und -propylcellulose, hochveretherte Methylhydroxyethylcellulose sowie Kernmehlether genannt.

Eine große Gruppe von Verdickern, die breite Verwendung in den unterschiedlichsten Anwendungsgebieten finden, sind die vollsynthetischen Polymere wie Polyacryl- und Polymethacryl-Verbindungen, die vernetzt oder unvernetzt und ggf. kationisch modifiziert sein können, Vinylpolymere, Polycarbonsäuren, Polyether, aktivierte Polyamidderivate, Rizinusölderivate, Polyimine, Polyamide und Polyurethane. Beispiele für derartige Polymer sind Acrylharze, Ethylacrylat-Acrylamid-Copolymere, Acrylsäureester-Methacrylsäureester-Copolymere, Ethylacrylat-Acrylsäure-Methacrylsäure-Copolymere, N-Methylolmethacrylamid, Maleinsäureanhydrid-Methylvinylether-Copolymere, Polyether-Polyol-Copolymere sowie Butadien-StyrolCopolymere.

Weitere geeignete Verdicker sind Derivate organischer Säuren sowie deren Alkoxid-Addukte, beispielsweise Arylpolyglykolether, carboxylierte Nonylphenolethoxylatderivate, Natriumalginat, Diglycerinmonoisostearat, Nichtionogene Ethylenoxid-Addukte, Kokosfettsäurediethanolamid, Isododecenylbernsteinsäureanhydrid sowie Galactomannan.

Verdicker aus den genannten Substanzklassen sind kommerziell erhältlich und werden beispielsweise unter den Handelsnamen Acusol®-820 (Methacrylsäure(stearylalkohol-20-EO)ester-Acrylsäure-Copolymer, 30%ig in Wasser, Rohm & Haas), Dapral®-GT-282-S (Alkylpolyglykolether, Akzo), Deuterol®-Polymer-11 (Dicarbonsäure-Copolymer, Schöner GmbH), Deuteron®-XG (anionisches Heteropolysaccharid auf Basis von β-D-Glucose, D-Manose, D-Glucuronsäure, Schöner GmbH), Deuteron®-XN (nichtionogenes Polysaccharid, Schöner GmbH), Dicrylan®-Verdicker-O (Ethylenoxid-Addukt, 50%ig in Wasser/Isopropanol, Pfersse Chemie), EMA®-81 und EMA®-91 (Ethylen-Maleinsäureanhydrid-Copolymer, Monsanto), Verdicker-QR-1001 (Polyurethan-Emulsion, 19-21%ig in Wasser/Diglykolether, Rohm & Haas), Mirox®-AM (anionische Acrylsäure-Acrylsäureester-Copolymer-Dispersion, 25%ig in Wasser, Stockhausen), SER-AD-FX-1100 (hydrophobes Urethanpolymer, Servo Delden), Shellflo®-S (hochmolekulares Polysaccharid, mit Formaldehyd stabilisiert, Shell), Shellflo®-XA (Xanthan-Biopolymer, mit Formaldehyd stabilisiert, Shell), Kelzan, Keltrol T (Kelco) angeboten.

In einer weiteren bevorzugten Ausführungsform enthält die erfindungsgemäße Zusammensetzung gegebenenfalls ein oder mehrere Enzyme, insbesondere Cellulasen.

Die Zusammensetzung kann weiterhin gegebenenfalls UV-Absorber enthalten, die auf die behandelten Textilien aufziehen und die Lichtbeständigkeit der Fasern und/oder die Lichtbeständigkeit der sonstigen Rezepturbestandteile verbessern. Unter UV-Absorber sind organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, wie beispielsweise das wasserlösliche Benzolsulfonsäure-3-(2H-benzotriazol-2-yl)-4-hydroxy-5-(methylpropyl)-mononatriumsalz (Cibafast^{®} H), in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet. Besondere Bedeutung haben Biphenyl- und vor allem Stilbenderivate wie sie beispielsweise in der EP 0728749 A beschrieben werden und kommerziell als Tinosorb^{®} FD oder Tinosorb^{®} FR ex Ciba erhältlich sind. Als UV-B-Absorber sind zu nennen 3-Benzylidencampher bzw. 3-Benzylidennorcampher und dessen Derivate, z.B. 3-(4-Methylbenzyliden)campher, wie in der EP 0693471 B1 beschrieben; 4-Aminobenzoesäurederivate, vorzugsweise 4-(Dimethylamino)benzoesäure-2-ethylhexylester, 4-(Dimethylamino)benzoesäure-2-octylester und 4-(Dimethylamino)benzoesäureamylester; Ester der Zimtsäure, vorzugsweise 4-Methoxyzimtsäure-2-ethylhexylester, 4-Methoxyzimtsäurepropylester, 4-Methoxyzimtsäureisoamylester, 2-Cyano-3,3-phenylzirntsäure-2-ethylhexylester (Octocrylene); Ester der Salicylsäure, vorzugsweise Salicylsäure-2-ethylhexylester, Salicylsäure-4-isopropylbenzylester, Salicylsäurehomomenthylester; Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon; Ester der Benzalmalonsäure, vorzugsweise 4-Methoxybenzmalonsäuredi-2-ethylhexylester; Triazinderivate, wie z.B. 2,4,6-Trianilino-(p-carbo-2'-ethyl-1'-hexyloxy)-1,3,5-triazin und Octyl Triazon, wie in der EP 0 818 450 A1 beschrieben oder Dioctyl Butamido Triazone (Uvasorb® HEB); Propan-1,3-dione, wie z.B. 1-(4-tert.Butylphenyl)-3-(4'methoxyphenyl)propan-1,3-dion; Ketotricyclo(5.2.1.0)decan-Derivate, wie in der EP 0 694 521 B1 beschrieben. Weiterhin geeignet sind 2-Phenylbenzimidazol-5-sulfonsäure und deren Alkali-, Erdalkali-, Ammonium-, Alkylammonium-, Alkanolammonium- und Glucammoniumsalze; Sulfonsäurederivate von Benzophenonen, vorzugsweise 2-Hydroxy-4-methoxybenzophenon-5-sulfonsäure und ihre Salze; Sulfonsäurederivate des 3-Benzylidencamphers, wie z.B. 4-(2-Oxo-3-bornylidenmethyl)benzolsulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol 1789), 1-Phenyl-3-(4'-isopropylphenyl)-propan-1,3-dion sowie Enaminverbindungen, wie beschrieben in der DE 19712033 A1 (BASF). Die UV-A und UV-B-Filter können selbstverständlich auch in Mischungen eingesetzt werden. Neben den genannten löslichen Stoffen kommen für diesen Zweck auch unlösliche Lichtschutzpigmente, nämlich feindisperse, vorzugsweise nanoisierte Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente bereits für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, es können jedoch auch solche Partikel zum Einsatz kommen, die eine ellipsoide oder in sonstiger Weise von der sphärischen Gestalt abweichende Form besitzen. Die Pigmente können auch oberflächenbehandelt, d.h. hydrophilisiert oder hydrophobiert vorliegen. Typische Beispiele sind gecoatete Titandioxide, wie z.B. Titandioxid T 805 (Degussa) oder Eusolex® T2000 (Merck). Als hydrophobe Coatingmittel kommen dabei vor allem Silicone und dabei speziell Trialkoxyoctylsilane oder Simethicone in Frage. Vorzugsweise wird mikronisiertes Zinkoxid verwendet. Weitere geeignete UV-Lichtschutzfilter sind der Übersicht von P.Finkel in SÖFW-Journal 122, 543 (1996) zu entnehmen.

Die UV-Absorber können in Mengen von 0,01 Gew.-% bis 5 Gew.-%, vorzugsweise von 0,03 Gew.-% bis 1 Gew.-%, eingesetzt werden.

Die erfindungsgemäßen Zusammensetzungen können nach dem Fachmann geläufigen Techniken zur Herstellung von Konditioniermittel erhalten werden. Die Mittel können durch Aufmischen unmittelbar aus ihren Rohstoffen, gegebenenfalls unter Einsatz von hochscherenden Mischapparaturen erhalten werden. Für flüssige Formulierungen empfiehlt sich ein Aufschmelzen gegebenenfalls vorhandener Weichmacherkomponenten und ein nachfolgendes Dispergieren der Schmelze in einem Lösungsmittel, vorzugsweise Wasser. Die erfindungsgemäß einzusetzenden Silizium-haltigen Verbindungen können durch einfaches Zumischen in die Konditioniermittel integriert werden.

Die folgenden Ausführungsbeispiele sollen die Erfindung beispielhaft erläutern, ohne sie darauf zu beschränken.

### Beispiel 1: Vorbereitungen und allgemeine Informationen

### 1. Ausrüstung:

Als auszurüstendes Textil wurde das Bleichnesselgewebe 1.1.10 (Baumwolle) verwendet, das zuvor trocken glattgebügelt wurde. Pro Behandlung wurden drei Prüfmuster mit den Maßen 50 x 25 mm (gesamt 50 x 75 mm) zugeschnitten. Dabei wurde das Prüfmuster (50 x 75 mm) in einer Kristallisierschale mit 2 Sprühstößen eines handelsüblichen Sprühaufsatzes besprüht, was einer Auftragsmenge von 0,023 g/cm² entspricht.

### 2. Behandlung mittels Bügeleisen:

Das nasse Prüfmuster wurde für 10 sec mit einem Bügeleisen mit der Stufe III trockengebügelt. Nach dem Erkalten des Prüfmusters wurden daraus drei gleiche Muster der Größe 50 x 25 mm herausgeschnitten und die Knittererholungswinkel bestimmt.

### 3. Durchführung der Prüfung

Der Knitterwinkelerholungstester funktioniert in Übereinstimmung mit den Anforderungen der BS EN 22313, ISO 2313, M&S P22 und AATCC Test Methode 66. Es besteht aus zwei Einheiten. Die erste Vorrichtung, bestehend aus zwei einzelnen quaderförmigen Gewichtsblöcken, dient zur Faltenbildung auf dem Textil durch Gewichtsbelastung. Die zweite Einheit ist das eigentliche Meßgerät mit dem der Knittererholungswinkel bestimmt wird.

### 3.1 Belastung

Das Prüfmuster mit den Maßen 50x25 mm wird an beiden Enden mit einer Plastik-Pinzette zusammengehalten. Dabei darf man nicht mehr als 5 mm Stoff fassen. Die Falte wird dadurch erzeugt, daß das Muster mit einem planaren Gewichtsblock mit einem definierten Gewicht von 19,63 N (2 kg) für 5 Minuten belastet wird.

### 3.2 Messung der Wiederanknitterung

Das gefaltete Stoffmuster wird mit der mitgelieferten Stahl-Pinzette vorsichtig in die Halterung eingespannt. Nach dem Fixieren der Position wird der Stoff zusätzlich durch die obere Spannbacke eingespannt. Die vertikale Einstellung dient als Bezugspunkt. Wenn der gefaltete Stoff durch Drehen des Winkelrades diesen Punkt berührt, wird der Winkel am Winkelrad abgelesen.

Abgelesen wird 5 Minuten nach dem Entfernen des Stoffes von dem Gewicht bzw. nach der Faltenbildung. Generell gilt, je größer der Knitterrückstellwinkel, desto besser das Anti-Knitter-Verhalten des gefalteten Stoffmusters.

### 4. Untersuchte Substanzen

Hansa SQE 2620 Diquaternäres Polydimethylsiloxan (Silikonquat)
Hansa ASM 9180 Höher alkyl-modifiziertes Amidoaminosiloxan
Arristan 64 Aminoalkylsiloxan
Hansa SWE 3620 Alkyl-modifiziertes Polysiloxan (Silikonwachs)

### Beispiel 2: Versuchsergebnisse

In den Ergebnistabellen ist die Knittererholungswinkeldifferenz (KEW) zum jeweiligen Vergleich (Wasser, handelsübliches Silikonöl-haltiges Mittel oder eine 3%ige ethanolische Lösung) angegeben. Eine positive Zahl bedeutet eine Erhöhung des Knitterrückstellwinkels und somit eine Performancesteigerung.

### 2.1. On-Top-Untersuchungen

Bei diesen Untersuchungen wurde einem handelsüblichen Silikonöl-haltigen Mittel on Top der Wirkstoff in einer Konzentration von 1 % Aktivsubstanz beigemischt. Die Behandlung erfolgte wie unter Beispiel 1 beschrieben.

| Substanzen: | KEW im Vergleich | KEW im Vergleich zu |
|---|---|---|
| | zu Wasser | handelsüblichem Mittel |
| Hansa SQE 2620 | 5 | 13 |
| Hansa SWE 3620 | 11 | 19 |
| Hansa ASM 9180 | 28 | 36 |
| Arristan 64 | 20 | 28 |

Man sieht, dass vor allem das Amidoaminosiloxan und das Aminoalkylsiloxan gute Antiknitter-Performance zeigen.

### 2.2. Untersuchungen zum Ersatz des Silikonöls im handelsüblichen Mittel

### 2.2.1.

Bei diesen Untersuchungen wurde der Wirkstoff in einer Konzentration von 1% Aktivsubstanz in einer 3%igen ethanolischen Lösung gelöst. Die Behandlung erfolgte wie unter Beispiel 1 beschrieben.

| Substanzen | KEW im Vergleich zu | KEW im Vergleich zu |
|---|---|---|
| | Wasser/Ethanol (3%) | handelsüblichem Mittel |
| Hansa SQE 2620 | 20 | 15 |
| Hansa SWE 3620 | 23 | 18 |
| Arristan 64 | 28 | 23 |
| Hansa ASM 9180 | 30 | 25 |

Man erkennt die gute Performance des Amidoaminosiloxans und des Aminoalkylsiloxans. Die etwas schlechteren KEW-Differenzen zu dem handelsüblichen Mittel sind durchweg auch bei den nachfolgenden Versuchen vorhanden und betragen immer um die 5°. Die ermittelte Differenz für die einzelnen Messreihen wird separat angegeben.

### 2.2.2.a

Aufgrund des besseren Abschneidens der On-Top-Formulierungen im Vergleich zu den Basis-Rezepturen kann auf synergistische Effekte zwischen den verschiedenen Siloxanen geschlossen werden. Im folgenden werden Versuche zur Ermittlung einer optimalen Mischung diskutiert.

Bei diesen Untersuchungen wurden die Wirkstoffe in einer jeweiligen Konzentration von 0,5 % Aktivsubstanz (1% Gesamtkonzentration Aktivsubstanz) in einer 3%igen ethanolischen Lösung gelöst. Die Behandlung erfolgte wie unter Beispiel 1 beschrieben. Als Referenz dient der KEW des handelsüblichen Mittels und der KEW von Wasser/Ethanol (3%); KEW-Differenz :4°

| Siloxan-Mischung (0.5%/0.5%) | KEW im Vergleich zu | KEW im Vergleich zu |
|---|---|---|
| | Wasser/Ethanol (3%) | handelsüblichem Mittel |
| Hansa SWE 3620/Arristan 64 | 24 | 20 |
| Hansa SWE 3620/Hansa ASM 9180 | 18 | 14 |
| Hansa SWE 3620/Hansa SQE 2620 | 23 | 19 |
| Hansa SQE 2620/Hansa ASM 9180 | 35 | 31 |
| Hansa SQE 2620/Arristan 64 | 29 | 25 |
| Hansa ASM 9180/Arristan 64 | 35 | 31 |

### 2.2.2.b.

Bei diesen Untersuchungen wurden die Wirkstoffe in einer Konzentration von 0,4 % und 0,6 % Aktivsubstanz (1% Gesamtkonzentration Aktivsubstanz) in einer 3%igen ethanolischen Lösung gelöst. Die Behandlung erfolgte wie unter Beispiel 1 beschrieben. Als Referenz dient der KEW des handelsüblichen Mittels und der KEW von Wasser/Ethanol (3%); KEW-Differenz :6°

| | 0.6/0.4-Mischung | | 0.4/0.6-Mischung | |
|---|---|---|---|---|
| Siloxan-Mischung | KEW im | KEW im | KEW im Vergleich | KEW im |
| | Vergleich zu | Vergleich zu | zu Wasser/ | Vergleich zu |
| | Wasser/ | handels- | Ethanol (3%) | handels- |
| | Ethanol (3%) | üblichem | | üblichem Mittel |
| | | Mittel | | |
| Hansa SQE 2620/ | 18 | 12 | 31 | 23 |
| Hansa ASM 9180 | | | | |
| Hansa ASM 9180/ | 25 | 19 | 36 | 30 |
| Arristan 64 | | | | |

Das jeweils unterstrichene Produkt beschreibt die zugehörige Konzentration.

### 2.2.2.c.

Bei diesen Untersuchungen wurden die Wirkstoffe in einer Konzentration von 0,3 % und 0,7 % Aktivsubstanz (1 % Gesamtkonzentration Aktivsubstanz) in einer 3%igen ethanolischen Lösung gelöst. Die Behandlung erfolgte wie unter Beispiel 1 beschrieben. Als Referenz dient der KEW des handelsüblichen Mittels und der KEW von Wasser/Ethanol (3%); KEW-Differenz :5°

| | 0.7/0.3-Mischung | | 0.3/0.7-Mischung | |
|---|---|---|---|---|
| Siloxan-Mischung | KEW im | KEW im | KEW im | KEW im |
| | Vergleich zu | Vergleich zu | Vergleich zu | Vergleich zu |
| | Wasser/Ethanol | handels- | Wasser/ | handels- |
| | (3%) | üblichem | Ethanol (3%) | üblichem Mittel |
| | | Mittel | | |
| Tubingal FAM/ | 21 | 16 | 19 | 14 |
| Hansa ASM 9180 | | | | |
| Hansa SQE 2620/ | 20 | 15 | 24 | 9 |
| Hansa ASM 9180 | | | | |
| Hansa ASM 9180/ | 24 | 19 | 25 | 20 |
| Arristan 64 | | | | |

Das jeweils unterstrichene Produkt beschreibt die zugehörige Konzentration.

Als besonders gute Mischungen gingen aus den Untersuchungen hervor:

| | |
|---|---|
| Hansa ASM 9180/Arristan 64 | (0,4/0,6) |
| Hansa ASM 9180/Arristan 64 | (0,5/0,5) |
| Hansa SQE 2620/Hansa ASM 9180 | (0,5/0,5) |

Die Konzentration der Siloxane wurde auf einen Aktivgehalt von insgesamt 0,35% weiter reduziert. Dies führt zu folgenden Ergebnissen:

| Siloxan-Mischung | KEW im Vergleich | KEW im Vergleich |
|---|---|---|
| | zu Wasser/Ethanol | zu handels- |
| | | üblichem Mittel |
| Hansa ASM 9180 (0.35 %) | 22 | 9 |
| Arristan 64 (0.35 %) | 22 | 8 |
| Hansa ASM 9180 (0.18%)/Arristan 64 (0.18%) | 26 | 12 |
| Hansa SQE 2620 (0.18 %)/ Hansa ASM 9180 (0.18 %) | 21 | 8 |
| Hansa ASM 9180 (0.14 %)/Arristan 64 (0.21 %) | 33 | 19 |

Mit der besten Mischung (Produkt mit Hansa ASM 9180 (0.14 %)/Arristan 64 (0.21 %)) wurden darüber hinaus noch Vergleichsversuche mit weiteren handelsüblichen Produkten durchgeführt (Beispiel 3).

### Beispiel 3: Vergleiche mit weiteren handelsüblichen Produkten

Durchführung: Die Behandlungsprozedur bestehend aus Textilausrüstung, Bügel- und Waschvorgang wurde 4 mal wiederholt.

### 3.1 Textilausrüstung:

Als auszurüstendes Textil wurde das Bleichnesselgewebe 1.1.10 verwendet, welche pro Behandlung in vier Prüfmuster mit den Maßen 20x120 cm zugeschnitten wurde.

Zur Knittererzeugung wurden die Textilmuster in einer Haushalts-Waschmaschine gewaschen (nur mit H₂O) und im Klimaraum für 24 h frei-hängend getrocknet. Mit 10 Sprühstößen eines handelsüblichen Sprühaufsatzes wurden die liegenden Prüfmuster mit der Testlösung möglichst homogen besprüht. Die Auftragsmenge entspricht 0,16 g/cm².

### 3.2 Bügeluntersuchung:

Für die Bügelversuche wurde ein handelsübliches Dampfbügeleisen der Firma Rowenta Professional Laser von einer selbst gebauten automatischen Bügelapparatur 67 cm weit in Längsrichtung über das Gewebe gezogen. Die Geschwindigkeit betrug 53,3 mm/s (= 3200 mm/min). Die Temperatur des Bügeleisens wurde auf Stufe III eingestellt. Das Bügeleisen wurde mittels Tarierschrot auf 2940 g beschwert. Da die Gleitfläche des Bügeleisens eine Länge von 23,5 cm und eine maximale Breite von 12 cm besaß, und das Gerät zu Beginn und am Ende der Messung noch auf dem Gewebe auflag, verblieb auf dem Gewebe eine ca. 20 cm lange und 12 cm breite Fläche für die

Messdatenauswertung, auf welcher von insgesamt 1000 Meßpunkten 400 (Messwerte 300-700) zur Berechnung des Mittelwertes hinzugezogen wurden.

### 3.3 Durchführung der Bügelversuche und Auswertung:

Zur Minimierung eventueller Feuchtigkeits-Einflüsse des Bügel-Untergrunds auf die Bügelkräfte wurden die Untersuchungen in zwei Messreihen aufgegliedert. Für jede Formulierung wurden mit dem Auflagegewicht von 2940 g jeweils 5 Textilstreifen 4 mal gebügelt. Der jeweils erste Bügeldurchgang wurde für die spätere Auswertung nicht mit einbezogen. Das Bügeleisen wurde dafür vor jeder Messung bis zum Abschalten der Kontrolllampe erwärmt. Während der Messfahrt wurde der Netzstecker herausgezogen, um den Widerstand des Zuleitungskabels zu vermeiden. Vor jeder neuen Formulierung wurde das Bügeleisen mit einer Zitronensäure-Lösung (3 %), mit Ethanol und mit dest. Wasser gereinigt. Ein Textilstreifen der jeweiligen Formulierung wurde zum Vorbügeln benutzt, um die Bügelauflage aufzuwärmen und eventuelle Rückstände am Bügeleisen zu beseitigen.

Während des Bügelvorganges wurde visuell auf das Verschwinden der Knitter nach jedem Bügelvorgang geachtet.

### 3.4 Waschvorgang

**Versuchsbedingungen**

| | |
|---|---|
| Programm: | 40°C Koch/Buntprogramm |
| Waschzyklen: | 1 |
| Beladung: | 3,5 kg (Testlappen + saubere Füllwäsche) |
| Dosierung: | 109 g PNW + 36 ml Vernel (Wild-Rose) |

Die Prüfmuster wurden direkt aus der Waschmaschine nass auf einem Wäscheständer aufgehangen und im Klimaraum für 24 Stunden getrocknet.

### 3.5 Anti-Knitter-Test nach AATCC 124

Die zerknitterten Prüfmuster wurden visuell gegen Referenzstandards nach AATCC 124 durch Notenvergabe (1-5) bewertet. Der Referenzstandard mit der Note 1 enthält die meisten Knitter. Die Note 5 ist absolut knitterfrei. Die Bewertung erfolgte durch 8 Panelisten. Aus 8 verschiedenen Messwerten wurde ein Mittelwert gebildet. Von jedem Produkt wurden drei Prüfmuster ausgerüstet, so dass insgesamt pro Produkt 8x3 Messwerte zur Auswertung vorlagen.

### 3.6 Ergebnisse

- Tabelle 1:: Bügelkraftmessungen nach mehrmaliger Behandlung der gleichen Prüfmuster (Mittelwerte aus 3 Einzelmessungen)

| Siloxan-Mischung | 1. Behandlung | 2. Behandlung | 3. Behandlung |
|---|---|---|---|
| H₂O | 19.1 | 10.5 | 10.3 |
| Handelsübliches Mittel | 16.4 | 8.7 | 7.5 |
| Erfindungsgemäßes Mittel | 10.6 | 7.5 | 6.5 |
| Handelsübliches Mittel 2 | 9.8 | 8.5 | 7.4 |
| Handelsübliches Mittel 3 | 15.8 | 12.3 | 11.9 |

**Tabelle 2: Anti-Knitter-Verhalten der Prüfmuster während des Bügelns 100% knitterfrei nach x BV (max. 4 BV (Bügelvorgänge)/Prüfmuster**

| | H₂O | Handels- | Erfindungs- | Handels- | Handels-übliches |
|---|---|---|---|---|---|
| | | übliches | gemäßes | übliches | Mittel 3 |
| | | Mittel | Mittel | Mittel 2 | |
| 1. Behandlung | - | 4 | 3 | 4 | 4 |
| 2. Behandlung | - | 4 | 3 | 4 | 4 |
| 3. Behandlung | - | 3 | 2 | 3 | 4 |

**Tabelle 3: Anti-Knitter-Bewertung nach mehrmaliger Behandlung der gleichen Prüfmuster nach AATCC 124 (direkt aus der Waschmaschine (Mittelwert aus 8 x 3 Messungen)**

| | H₂O | Handels- | Erfindungs- | Handels- | Handelsübliches |
|---|---|---|---|---|---|
| | | übliches | gemäßes | übliches | Mittel 3 |
| | | Mittel | Mittel | Mittel 2 | |
| 1. Behandlung | 1 | 1 | 1 | 1 | 1 |
| 2. Behandlung | 1.1 | 1.2 | 1.5 | 1 | 1.1 |
| 3. Behandlung | 1 | 1.3 | 1.9 | 1.1 | 1.1 |
| 4. Behandlung | 1 | 1.2 | 2.2 | 1 | 1.2 |

### Beispiel 4: Sprühen und Glätten

### 4.0 Durchführung:

Die einmalige Behandlungsprozedur besteht aus folgenden Teilschritten: Waschen, Trocknen, Anti-Knitter-Test (AATCC 124), Besprühen und Glätten, Trocknen und Anti-Knitter-Test (AATCC 124).

### 4.1 Vorbereitung der Prüfmuster

Als Prüfmuster wurde die Bleichnesselgewebe 1.1.10 verwendet. Das mit Turmpulver vorgewaschenes Gewebe wurde gemäß AATCC 124 in der Größe 38 x 38 cm zugeschnitten. Pro Produkt wurden jeweils 3 Prüfmuster hergestellt.

### 4.2 Waschvorgang:

Zur Knittererzeugung wurden die Textilmuster in einer Haushalts-Waschmaschine wie folgt gewaschen.

| | |
|---|---|
| Programm: | 40°C Koch/Buntprogramm |
| Waschzyklen: | 1 |
| Beladung: | 3,5 kg (Prüfmuster + saubere Füllwäsche) |
| Dosierung: | 75 g PMP |

### 4.3 Trocknungsvorgang

Die nasse Wäsche wurde im Klimaraum für 24 h freihängend auf einem Wäscheständer getrocknet.

### 4.4 Anti-Knitter-Bewertung nach AATCC 124

Für die Ermittlung des Knitter-Ausgangszustands und damit für eine quantitative Bewertung der Ergebnisse wurden die geknitterten Prüfmuster auch vor der Sprühbehandlung nach AATCC 124 bewertet. Bei der Abmusterung nahmen 7 verschiedene Panelisten teil, so dass 7 x 3 Werte pro Produkt zur Auswertung vorlagen.

### 4.5 Sprühbehandlung:

Mit 5 Sprühstößen eines handelsüblichen Sprühaufsatz der alten Perla-Sprühflasche wurden die liegenden Prüfmuster mit der
Testlösung möglichst homogen in einem Abstand von ca. 25 cm besprüht. Die Auftragsmenge entspricht 0,08 g/cm².

### 4.6 Glättung

Unmittelbar nach der Sprühbehandlung wurde das ausgerüstete Prüfmuster mit den Händen jeweils in die horizontale und vertikale Richtung 2 mal (oben und unten) auseinandergezogen und geglättet (siehe u.a. Bild)

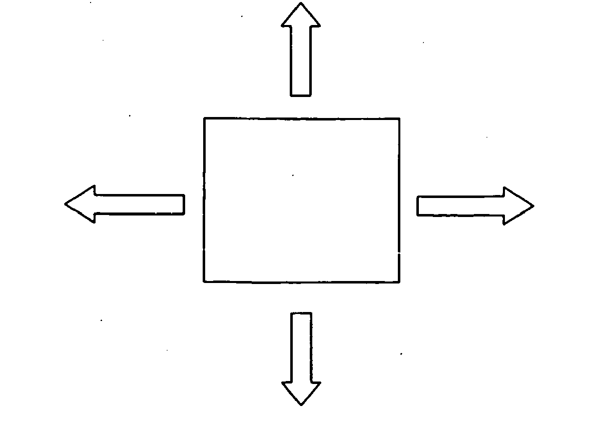

### 4.7 Trocknung:

Die behandelten Prüfmuster wurden für 30 Minuten freihängend auf einem Wäscheständer im Klimaraum getrocknet.

### 4.8 Anti-Knitter-Bewertung nach AATCC 124:

Die behandelten Prüfmuster wurden visuell gegen Referenzstandards nach AATCC 124 durch Notenvergabe (1-5) bewertet.

Das Referenzstandard mit der Note 1 enthält die meisten Knitter. Die Note 5 ist absolut knitterfrei. Es konnten auch Noten <1 und Noten mit einer Stelle hinterm Komma vergeben werden.

Der Bewertung erfolgte durch 7 Panelisten. Aus 7 verschiedenen Messwerten wurde ein Mittelwert gebildet. Von jedem Produkt wurden drei Prüfmuster ausgerüstet, so dass insgesamt pro Produkt 7x3 Messwerte zur Auswertung vorlagen.

### 4.9 Ergebnisse

**Tabelle 1: Antiknitter-Bewertung nach AATCC 124 vor und nach einer Sprühbehandlung Einzelwerte sind Mittelwerte aus jeweils 3 Messungen)**

| | unbehandelt | H₂O | Handels- | Erfindungs- | Handels- | Handels- |
|---|---|---|---|---|---|---|
| | (trocken) | | übliches | gemäßes | übliches | übliches |
| | | | Mittel | Mittel | Mittel 2 | Mittel 3 |
| Mittelwert vor | | | | | | |
| der Sprüh- | 0,9 | 1,0 | 0,9 | 0,9 | 0,9 | 1,0 |
| behandlung | | | | | | |
| Mittelwert Nach | | | | | | |
| der Sprüh- | 1,0 | 1,3 | 1,4 | 2,2 | 1,5 | 1,6 |
| behandlung | | | | | | |

Wie diesen Ergebnissen zu entnehmen ist, bietet die neue Formulierung folgende Vorteile:
- Bügelerleichterung im klassischen Sinn (reduzierte Bügelkräfte)
- Bügelerleichterung durch schnellere Glättung der Textilien
- Knitterreduktion bei geknitterten/getragenen Textilien

### Beispiel 5: Vergleichsversuche zu handelüblichem Weichspüler

Als Referenz wurde ein handelsüblicher Esterquat-haltiger Weichspüler eingesetzt. Die Formulierungen wurden in einer 171-Weichspülflotte eingesetzt und anschliessend das Anti-Knitter-Verhalten der Textlilen mittels dem Knitterwinkelerholungstester geprüft.

| Formulierung | Knittererholungswinkel [°] | Differenz zur Referenz |
|---|---|---|
| | (Mittelwert aus 3 | (handelsüblicher Esterquat- |
| | Einzelbestimmungen) | haltiger Weichspüler) |
| 10% Esterquat + 0,59% | 120 | +9 |
| Hansa ASM + 0,89% | | |
| Arristan 64 | | |
| 13% Esterquat + 0,41% | 114 | +4 |
| Hansa ASM 9180 + 0,62% | | |
| Arristan 64 | | |

## Patentansprüche

1. Zusammensetzung enthaltend mindestens ein Aminoalkylsiloxan und mindestens ein mittels Hydroxycarbonsäuren und/oder Mono- und/oder Disacchariden mit jeweils mindestens zwei Hydroxylgruppen höher alkyl-modifiziertes Amidoaminosiloxan, **dadurch gekennzeichnet, dass** das Aminoalkylsiloxan und das höher alkyl-modifizierte Amidoaminosiloxan ausgewählt sind aus Substanzen der allgemeinen Formel (1) 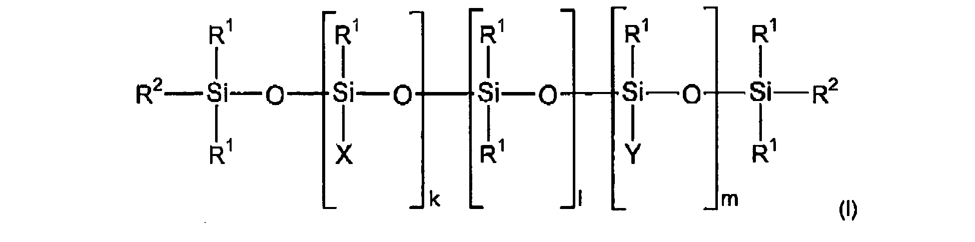 wobei für das höher alkyl-modifizierte Amidoaminosiloxan
R¹ für gleiche oder verschiedene, einwertige, gegebenenfalls Fluor-, Chlor- oder Brom-substituierte C₁- bis C₈-Kohlenwasserstoffreste, Wasserstoffatome, C₁ bis C₁₂-Alkoxy-oder Hydroxyreste oder Alkylglykolreste steht,
R² für R¹ und/oder eine der Gruppen X und/oder Y steht,
X für eine Gruppe der allgemeinen Formeln (II) und/oder (III) steht, 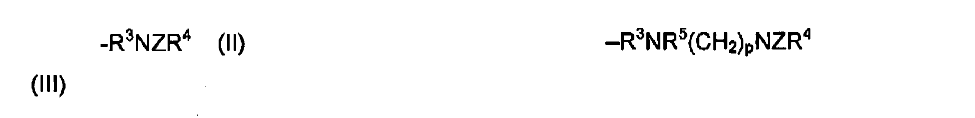 wobei R³ für einen zweiwertigen C₁-bis C₁₈-Kohlenwasserstoffrest,
R⁴ für ein Wasserstoffatom oder einen gegebenenfalls Fluor-, Chlor- oder Brom substituierten C₁- bis C₁₀-Alkylrest steht,
Z abgeleitet ist von Hydroxycarbonsäuren und oxidierten Mono- und Disacchariden, jeweils mit wenigstens 2 Hydroxylgruppen,
R⁵ für ein Wasserstoffatom und/oder Z steht,
Y für eine Gruppe der allgemeinen Formel (IV) und/oder (V) steht 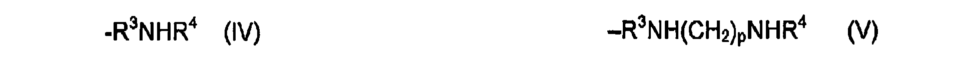 wobei R³ und R⁴ die oben genannten Bedeutungen haben, k einen durchschnittlichen Wert von 0,5 bis 50,
I einen durchschnittlichen Wert von 10 bis 1500,
m einen durchschnittlichen Wert von 0 bis 50 hat und
p für die Werte 2, 3 oder 4 steht,
mit der Maßgabe, dass das Verhältnis von k zu m im Bereich von 10 : 1 bis 0,1 : 1 liegt, und wobei für das Aminoalkylsiloxan in Formel (I)
R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy-oder Hydroxyreste oder Alkylglykolreste steht,
R² für R¹ und/oder für Y steht,
Y für eine Gruppe der allgemeinen Formel (IV) und/oder (V) steht 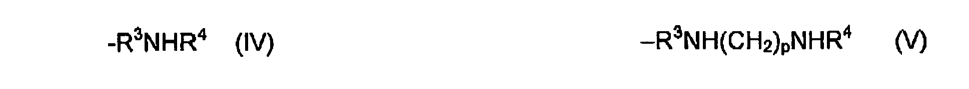 wobei R³ für einen zweiwertigen C₁-bis C₁₈-Kohlenwasserstoffrest,
R⁴ für ein Wasserstoffatom oder einen gegebenenfalls Fluor-, Chlor- oder Brom substituierten C₁- bis C₁₀-Alkylrest steht,
k den Wert 0 hat,
I einen durchschnittlichen Wert von 10 bis 1500,
m einen durchschnittlichen Wert von 1 bis 100 hat und
p für die Werte 2, 3 oder 4 steht.

2. Zusammensetzung nach Anspruch 1, **dadurch gekennzeichnet, dass** Z abgeleitet ist von
Uron-, Aldar- und Aldonsäuren der allgemeinen Formeln (VII), (VIII) und (IX)

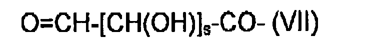

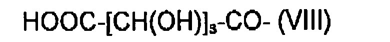

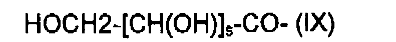

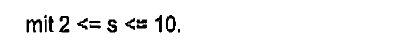

3. Textilbehandlungsmittel, enthaltend eine Zusammensetzung nach Anspruch 1 oder 2.

4. Textilbehandlungsmittel nach Anspruch 3, **dadurch gekennzeichnet, dass** es sich um eine Feinappretur, ein Bügelhilfsmittel oder einen Weichspüler handelt.

5. Behältnis enthaltend eine Zusammensetzung nach Anspruch 1 oder 2 oder ein Textilbehandlungsmittel nach Anspruch 4 oder 5.

6. Behältnis nach Anspruch 5, **dadurch gekennzeichnet, dass** es einen Sprühspender umfasst.

7. Verwendung einer Zusammensetzung nach Anspruch 1 oder 2 zur Behandlung von Textilien, insbesondere als Feinappretur, Bügelhilfe oder Weichspüler.

8. Verwendung einer Zusammensetzung nach Anspruch 1 oder 2 oder eines Textilbehandlungsmittels nach Anspruch 4 oder 5 zur Entfernung und/oder Verminderung von Falten und/oder Faltenbildung und/oder zur Vorbeugung der Faltenbildung in Textilien,

## Claims

1. A composition comprising at least one aminoalkylsiloxane and at least one higher alkyl-modified amido aminosiloxane modified by hydroxycarboxylic acids and/or mono and/or disaccharides having in each case at least two hydroxyl groups, **characterised in that** the aminoalkylsiloxane and the higher alkyl-modified amido aminosiloxane are selected from substances of the general
Formula (I) 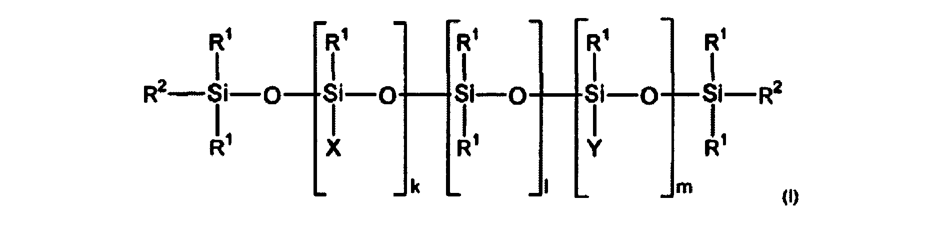 wherein, for the higher alkyl-modified amido aminosiloxane
R¹ stands for the same or different, monovalent, optionally fluorine-, chlorine- or bromine-substituted C₁ to C₁₈ hydrocarbon groups, hydrogen atoms, C₁ to C₁₂ alkoxy- or hydroxyl groups or alkyl glycol groups,
R² stands for R¹ and/or a group X and/or Y,
X stands for a group of the general Formulae (II) and/or (III), 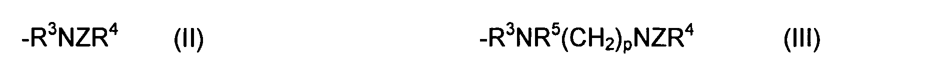 in which R³ stands for a divalent C₁ to C₁₈ hydrocarbon group,
R⁴ stands for a hydrogen atom or an optionally fluorine-, chlorine- or bromine-substituted C₁ to C₁₀ alkyl group,
Z is derived from hydroxy carboxylic acids and oxidised mono and disaccharides, each containing at least two hydroxyl groups,
R⁵ stands for a hydrogen atom and/or Z,
Y stands for a group of the general Formula (IV) and/or (V), 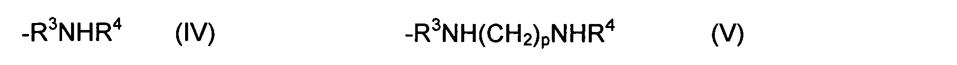 in which R³ and R⁴ have the abovementioned meanings,
k is an average value from 0.5 to 50,
I is an average value from 10 to 1500,
m has an average value of 0 to 50 and
p stands for the values 2, 3 or 4,
with the proviso that the ratio of k to m resides in the range 10:1 1 to 0.1:1,
and wherein for the aminoalkylsiloxane in Formula (I)
R¹ stands for the same or different, monovalent, optionally fluorine-, chlorine- or bromine-substituted C₁ to C₁₈ hydrocarbon groups, hydrogen atoms, C₁ to C₁₂ alkoxy or hydroxyl groups or alkyl glycol groups,
R² stands for R¹ and/or for Y,
Y stands for a group of the general Formula (IV) and/or (V), 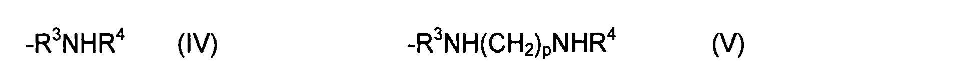 in which R³ stands for a divalent C₁ to C₁₈ hydrocarbon group,
R⁴ stands for a hydrogen atom or an optionally fluorine-, chlorine- or bromine-substituted C₁ to C₁₀ alkyl group,
k has the value 0,
I is an average value from 10 to 1500,
m has an average value of 1 to 100 and
p stands for the values 2, 3 or 4.

2. The composition according to Claim 1, **characterised in that** Z is derived from uronic, aldaric and aldonic acids of the general Formulae (VII), (VIII) and (IX)

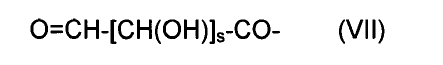

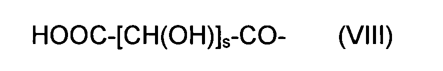

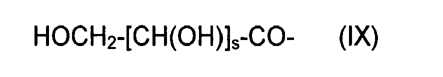

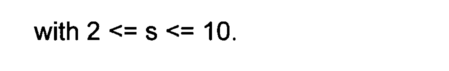

3. A fabric treatment agent, comprising a composition according to Claim 1 or 2.

4. The fabric treatment agent according to Claim 3, **characterised in that** said agent concerns a fine finisher, an ironing aid or a rinse softener.

5. A container comprising a composition according to one of Claims 1 or 2 or a fabric treatment agent according to Claim 4 or 5.

6. The container according to Claim 5, comprising a spray dispenser.

7. Use of a composition according to Claim 1 or 2 for treating fabrics, in particular as a fine finisher, ironing aid or rinse softener.

8. Use of a composition according to Claim 1 or 2 or of a fabric treatment agent according to Claim 4 or 5 for removing and/or reducing creases and/or the formation of creases and/or for preventing the formation of creases in fabrics.

## Revendications

1. Composition comprenant au moins un aminoalkylsiloxane et au moins un amidoaminosiloxane modifié avec un groupe alkyle supérieur au moyen d'acides hydroxycarboxyliques et/ou de monosaccharides et/ou de disaccharides comprenant respectivement au moins deux groupes hydroxyle, **caractérisée en ce que** l'aminoalkylsiloxane et l'amidoaminosiloxane modifié avec un groupe alkyle supérieur sont choisis parmi des substances répondant à la formule générale (I) 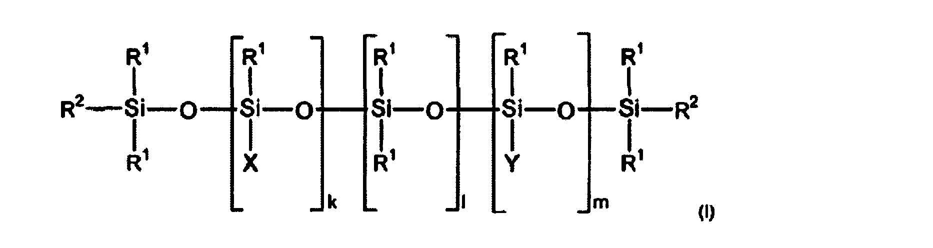 dans laquelle, pour l'amidoaminosiloxane modifié avec un groupe alkyle supérieur,
R¹ représente des résidus d'hydrocarbures en C₁-C₁₈ identiques ou différents, monovalents, éventuellement substitués avec un ou plusieurs atomes de fluor, de chlore ou de brome, des atomes d'hydrogène, des résidus hydroxyle ou alcoxy en C₁-C₁₂ ou bien des résidus d'alkylglycols ;
R² représente R¹ et/ou un des groupes X et/ou Y ;
X représente un groupe répondant aux formules générales (II) et/ou (III), 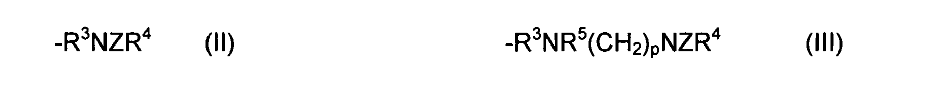 dans lesquelles R³ représente un résidu bivalent d'hydrocarbure en C₁-C₁₈;
R⁴ représente un atome d'hydrogène ou un résidu alkyle en C₁-C₁₀ éventuellement substitué avec un ou plusieurs atomes de fluor, de chlore ou de brome ;
Z dérive d'acides hydroxycarboxyliques et de monosaccharides et de disaccharides oxydés, comprenant respectivement au moins deux groupes hydroxyle ;
R⁵ représente un atome d'hydrogène et/ou Z ;
Y représente un groupe répondant aux formules générales (IV) et/ou (V) 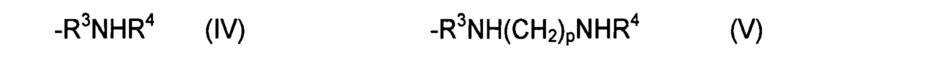 dans lesquelles R³ et R⁴ ont les significations indiquées ci-dessus ;
k possède une valeur moyenne de 0,5 à 50 ;
I possède une valeur moyenne de 10 à 1500 ;
m possède une valeur moyenne de 0 à 50 ; et
p possède les valeurs 2, 3 ou 4 ;
avec cette mesure que le rapport de k à m se situe dans la plage de 10 : 1 à 0,1 : 1 ;
et dans laquelle, pour l'aminoalkylsiloxane répondant à la formule (I),
R¹ représente des résidus d'hydrocarbures en C₁-C₁₈ identiques ou différents, monovalents, éventuellement substitués avec un ou plusieurs atomes de fluor, de chlore ou de brome, des atomes d'hydrogène, des résidus hydroxyle ou alcoxy en C₁-C₁₂ ou bien des résidus d'alkylglycols ;
R² représente R¹ et/ou Y;
Y représente un groupe répondant aux formules générales (IV) et/ou (V) 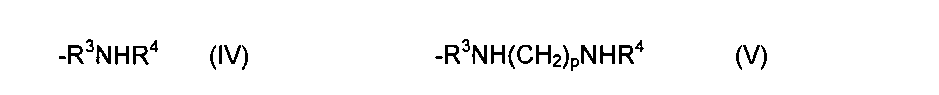 dans lesquelles R³ représente un résidu bivalent d'hydrocarbure en C₁-C₁₈ ;
R⁴ représente un atome d'hydrogène ou un résidu alkyle en C₁-C₁₀ éventuellement substitué avec un ou plusieurs atomes de fluor, de chlore ou de brome ;
k possède la valeur 0 ;
I possède une valeur moyenne de 10 à 1500 ;
I possède une valeur moyenne de 1 à 100 ; et
p possède les valeurs 2, 3 ou 4.

2. Composition selon la revendication 1, **caractérisée en ce que** Z dérive d'acides uroniques, aldariques et aldoniques répondant aux formules générales (VII), (VIII) et (IX)

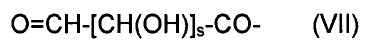

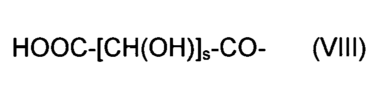

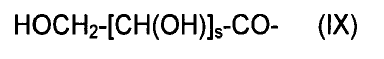

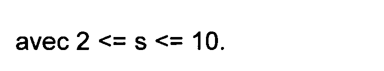

3. Agent de traitement des textiles, contenant une composition selon la revendication 1 ou 2.

4. Agent de traitement des textiles selon la revendication 3, **caractérisé en ce qu'**il s'agit d'un agent procurant un léger apprêt, d'un agent facilitant le repassage ou d'un agent assouplissant.

5. Récipient contenant une composition selon la revendication 1 ou 2 ou un agent de traitement des textiles selon la revendication 4 ou 5.

6. Récipient selon la revendication 5, **caractérisé en ce qu'**il comprend un atomiseur.

7. Utilisation d'une composition selon la revendication 1 ou 2, pour le traitement des textiles, en particulier à titre d'agent procurant un léger apprêt, d'agent facilitant le repassage ou d'agent assouplissant.

8. Utilisation d'une composition selon la revendication 1 ou 2 ou d'un agent de traitement des textiles selon la revendication 4 ou 5, pour éliminer et/ou réduire les plis et/ou la formation de plis et/ou à titre de prévention de la formation de plis dans les textiles.
